# EUROPEAN PATENT APPLICATION

(11) **EP 4 730 881 A1**
(43) Date of publication of application: **22.04.2026**
(21) Application number: 24858537.4
(22) Date of filing: 26.08.2024
(51) Int. Cl.: H04W 60/00

(54) **REGISTRATION METHOD, SYSTEM AND RELATED APPARATUS**

(30) Priority: 28.08.2023 CN 202311096255
(71) Applicant: Huawei Technologies Co., Ltd., Shenzhen, Guangdong 518129 (CN)
(72) Inventor: ZHANG, Yunji, Shenzhen, Guangdong 518129 (CN); DOU, Fenghui, Shenzhen, Guangdong 518129 (CN); XU, Haibo, Shenzhen, Guangdong 518129 (CN); FAN, Liangliang, Shenzhen, Guangdong 518129 (CN)
(74) Representative: Gill Jennings & Every LLP
(86) International application number: PCT/CN2024/114630
(87) International publication number: WO 2025/045001

(57) **Abstract**

This application discloses a registration method, a system, and a related apparatus. A UE includes an NTN communication module and a mobile communication module. The mobile communication module obtains registration information of the NTN communication module. After the mobile communication module registers with a terrestrial network core network, the NTN communication module performs a registration procedure of a non-terrestrial network core network via the mobile communication module, a terrestrial network radio access network, and the terrestrial network core network. After finding an NTN-RAN, the NTN communication module accesses the non-terrestrial network core network. In this way, after the UE finds a non-terrestrial network, because the UE has performed the registration procedure of the non-terrestrial network in a terrestrial network, and the non-terrestrial network core network stores registration information of the UE, the UE does not need to perform the registration procedure in the non-terrestrial network. This reduces signaling overheads between the UE and the non-terrestrial network core network, time required for the UE to perform the registration procedure in the non-terrestrial network, and power consumption of the UE.

## Description

This application claims priority to Chinese Patent Application No. 202311096255.8, filed with the China National Intellectual Property Administration on August 28, 2023 and entitled "REGISTRATION METHOD, SYSTEM, AND RELATED APPARATUS", which is incorporated herein by reference in its entirety.

### TECHNICAL FIELD

This application relates to the communication field, and in particular, to a registration method, a system, and a related apparatus.

### BACKGROUND

Currently, most user equipments (user equipments, UEs) support a non-terrestrial network (non-terrestrial network, NTN) communication function. UEs can perform communication via a satellite in areas such as oceans, deserts, grasslands, high-altitude zones, and uninhabited regions where mobile communication is unavailable, insufficient, or where communication systems have been damaged.

UEs can use the non-terrestrial network communication function only after successfully registering with a non-terrestrial network. In the process of registration of the UE with the non-terrestrial network, the UE needs to send signaling to the satellite and receive signaling from the satellite. Such a registration process is time-consuming and occupies a large quantity of air interface resources, and UEs have high power consumption.

### SUMMARY

This application provides a registration method, a system, and a related apparatus. A UE includes an NTN communication module and a mobile communication module. The mobile communication module obtains registration information of the NTN communication module. After the mobile communication module registers with a terrestrial network core network, the NTN communication module performs a registration procedure of a non-terrestrial network core network via the mobile communication module and the terrestrial network core network. After finding an NTN-RAN, the NTN communication module of the UE accesses the non-terrestrial network core network. In this way, the UE registers the NTN communication module with the NTN-CN via the mobile communication module and the TN-CN.

According to a first aspect, this application provides a registration method, applied to a communication system. The communication system includes a user equipment UE, a non-terrestrial network core network NTN-CN device, a non-terrestrial network access network NTN-RAN device, and a terrestrial network core network TN-CN device. The method includes: The UE sends a first registration request message to the TN-CN device, where the first registration request message is used for the UE to register with the NTN-CN device; and the TN-CN device sends the first registration request message to the NTN-CN device.

The NTN-CN device sends a first registration accept message to the TN-CN device, where the first registration accept message indicates that the UE successfully registers with the NTN-CN device. The TN-CN device sends the first registration accept message to the UE.

The UE finds the NTN-RAN device, and sends a second registration request message to the NTN-CN device, where the second registration request message is used for the UE to register with the NTN-CN device.

The NTN-CN device sends a second registration accept message to the UE. The UE receives the second registration accept message, and registers with the NTN-CN device.

In this way, the UE may perform a registration procedure of a non-terrestrial network in a terrestrial network. After the UE finds a base station of the non-terrestrial network, because the UE has performed the registration procedure of the non-terrestrial network in the terrestrial network, and the non-terrestrial network core network stores registration information of the UE, the UE can access the non-terrestrial network core network without performing the registration procedure in the non-terrestrial network. This reduces signaling overheads between the UE and the non-terrestrial network core network, time required for the UE to perform the registration procedure in the non-terrestrial network, and power consumption of the UE.

In a possible implementation, the communication system further includes a non-terrestrial network radio access network NTN-RAN device. Sending the second registration request message to the NTN-CN device specifically includes: The UE sends the second registration request message to the NTN-CN device via the NTN-RAN device.

That the NTN-CN device sends the second registration accept message to the UE specifically includes: The NTN-CN sends the second registration accept message to the UE via the NTN-RAN device. In this way, after finding the NTN-RAN device, the UE may send a message to the NTN-CN device via the NTN-RAN device, and may receive, via the NTN-RAN device, the message sent by the NTN-CN device.

In a possible implementation, the method further includes: After receiving the first registration request message, the NTN-CN device obtains an identifier of a first SIM card of the UE via the TN-CN device; after receiving the identifier of the first SIM card, the NTN-CN device performs authentication on a first SIM card via the TN-CN device; and after successfully authenticating the first SIM card, the NTN-CN device indicates, via the TN-CN device, the UE to perform security mode configuration on the first SIM card. That the NTN-CN device sends the first registration accept message to the TN-CN device specifically includes: After the UE completes security mode configuration on the first SIM card, the NTN-CN device sends the first registration accept message to the TN-CN device. In this way, an NTN-CN may obtain an identity of the UE through a TN-CN, perform authentication on the UE, and indicate the UE to perform security mode configuration. The UE performs, in the TN-CN network, some steps in which the UE registers with the NTN-CN. This reduces air interface resources, time, and power consumption for performing these steps in the NTN-CN network.

In a possible implementation, after receiving the first registration request message, that the NTN-CN device obtains the identifier of the first SIM card of the UE via the TN-CN device specifically includes: After receiving the first registration message, the NTN-CN device sends a first N1 non-terrestrial network container N1 NTN container to the TN-CN device, where the first N1 NTN container includes a first identity request message, and the first identity request message is used to obtain the identifier of the first SIM card; the TN-CN device sends a first non-access stratum NAS message to the UE, where the first NAS message includes the first N1 NTN container; after receiving the first N1 NTN container, the UE sends a second NAS message to the TN-CN device, where the second NAS message includes a second N1 TNT container, the second N1 TNT container includes a first identity response message, and the first identity response message includes the identifier of the first SIM card; and the TN-CN device sends the second N1 TNT container to the NTN-CN device. In this way, the NTN-CN device may obtain the identifier of the first SIM card of the UE via the TN-CN device.

In a possible implementation, after receiving the identifier of the first SIM card, that the NTN-CN device performs authentication on the first SIM card via the TN-CN device specifically includes: After receiving the identifier of the first SIM card, the NTN-CN device sends a third N1 non-terrestrial network container N1 NTN container to the TN-CN device, where the third N1 NTN container includes a first authentication request message, and the first authentication request message is used to perform authentication on the first SIM card; the TN-CN device sends a third NAS message to the UE, where the third NAS message includes a third N1 NTN container; after receiving the third N1 NTN container, the UE sends a fourth NAS message to the TN-CN device, where the fourth NAS message includes a fourth N1 TNT container, the fourth N1 TNT container includes a first authentication response message, and the first authentication response message includes an authentication response of the UE; and the TN-CN device sends the fourth N1 TNT container to the NTN-CN device. In this way, the NTN-CN device may perform authentication on the first SIM card of the UE via the TN-CN device.

In a possible implementation, after successfully authenticating the first SIM card, that the NTN-CN device indicates, via the TN-CN device, the UE to perform security mode configuration specifically includes: After successfully authenticating the first SIM card, the NTN-CN device sends a fifth N1 non-terrestrial network container N1 NTN container to the TN-CN device, where the fifth N1 NTN container includes a first security mode command message, and the first security mode command message indicates the UE to perform security mode configuration; the TN-CN device sends a fifth NAS message to the UE, where the fifth NAS message includes the fifth N1 NTN container; after receiving the fifth N1 NTN container, the UE sends a sixth NAS message to the TN-CN device, where the sixth NAS message includes a sixth N1 TNT container, the sixth N1 TNT container includes a first security mode complete message, and the first security mode complete message indicates that the UE has completed the security mode configuration; and the TN-CN device sends the sixth N1 TNT container to the NTN-CN device. In this way, the NTN-CN device may indicate, via the TN-CN device, the UE to perform security mode configuration on the first SIM card.

In a possible implementation, that the UE sends the first registration request message to the TN-CN device specifically includes: The UE sends a seventh NAS message to the TN-CN device, where the seventh NAS message includes a seventh N1 TNT container, and the seventh N1 TNT container includes the first registration request message. In this way, the UE may transparently transmit the N1 NTN container to the NTN-CN device based on the NAS message, and the TN-CN device forwards the N1 NTN container to the NTN-CN device without parsing content of the N1 NTN container. In this way, the UE registers with the NTN-CN device in the TN.

In a possible implementation, that the TN-CN device sends the first registration request message to the NTN-CN device specifically includes: The TN-CN device sends the seventh N1 TNT container to the NTN-CN device. In this way, the TN-CN device may send the first registration request message of the UE to the NTN-CN device.

In a possible implementation, the UE includes a mobile communication module; and that the UE sends the first registration request message to the TN-CN device specifically includes: The UE registers with the TN-CN device via the mobile communication module; and the UE sends the first registration request message to the TN-CN device via the mobile communication module. In this way, after the UE registers with the TN-CN device, the UE and the NTN-CN device may transmit, via the TN-CN device, signaling used for the UE to register with the NTN-CN device.

In a possible implementation, that the UE sends the first registration request message to the TN-CN device specifically includes: The UE sends a third registration request message to the TN-CN device, where the third registration request message includes the first registration request message, and the third registration request message is used for the UE to register with the TN-CN device. In this way, when sending the third registration request message to the TN-CN device, the UE may add, to the third registration request message, the first registration request message for registering the UE with the NTN-CN device, and the UE does not need to separately send two registration request messages, thereby reducing sending time and air interface overheads.

In a possible implementation, before obtaining the identifier of the first SIM card of the UE via the TN-CN device, the method further includes: After receiving the third registration request message, the TN-CN device obtains an identifier of a second SIM card of the UE; after receiving the identifier of the second SIM card, the TN-CN device performs authentication on the second SIM card; after successfully authenticating the second SIM card, the TN-CN device indicates the UE to perform security mode configuration on the second SIM card. Obtaining the identifier of the first SIM card of the UE via the TN-CN device specifically includes: The TN-CN device obtains the identifier of the first SIM card of the UE after the UE completes security mode configuration on the second SIM card; and the TN-CN device sends the identifier of the first SIM card to the NTN-CN device. In this way, only after obtaining the identifier of the second SIM card, successfully authenticating the second SIM card, and completing security mode configuration on the second SIM card, the TN-CN device can help the UE and the NTN-CN device transmit signaling used for the UE to register with the NTN-CN device.

In a possible implementation, that the TN-CN device sends the first registration accept message to the UE specifically includes: The TN-CN device sends a third registration accept message to the UE, where the third registration accept message includes the first registration accept message, and the third registration accept message indicates the UE to register with the TN-CN device. In this way, when sending the third registration accept message to the UE, the TN-CN device may add, to the third registration accept message, the first registration accept message indicating that the UE successfully registers with the NTN-CN device, and the TN-CN device does not need to separately send two registration messages, thereby reducing sending time and air interface overheads.

In a possible implementation, a registration type of the first registration request message is initial registration, and a registration type of the second registration request message is mobility registration.

According to a second aspect, this application provides another registration method, applied to a user equipment UE. The method includes: The UE sends a first registration request message to a terrestrial network core network TN-CN device, where the first registration request message is used by the UE to register with a non-terrestrial network core network NTN-CN device; the UE receives a first registration accept message sent by the TN-CN device, where the first registration accept message indicates that the UE successfully registers with the NTN-CN device; the UE finds a non-terrestrial network radio access network NTN-RAN device, and sends a second registration request message to the NTN-CN device, where the second registration request message is used for the UE to register with the NTN-CN device; and the UE receives a second registration accept message, and registers with the NTN-CN device. In this way, the UE sends, to the TN-CN device, the first registration request message for registering with the NTN-CN device, and the UE may complete, in a TN-CN via the TN-CN device, a step of registering with the NTN-CN device, thereby reducing registration overheads of the UE in an NTN-CN.

In a possible implementation, sending the second registration request message to the NTN-CN device specifically includes: The UE sends the second registration request message to the NTN-CN device via the NTN-RAN device. That the UE receives the second registration accept message specifically includes: The UE receives, via the NTN-RAN device, the second registration accept message sent by the NTN-CN. In this way, the UE may transmit a message to the NTN-CN device via the NTN-RAN device.

In a possible implementation, the UE includes a mobile communication module and a non-terrestrial network NTN communication module. That the UE sends the first registration request message to the TN-CN device specifically includes: The UE sends the first registration request message to the TN-CN device via the mobile communication module. That the UE receives the first registration accept message sent by the TN-CN device specifically includes: The UE receives, via the mobile communication module, the first registration accept message sent by the TN-CN device. Sending the second registration request message to the NTN-CN device specifically includes: The UE sends the second registration request message to the NTN-CN device via the NTN communication module. That the UE receives the second registration accept message specifically includes: The UE receives the second registration accept message via the NTN communication module. In this way, the mobile communication module of the UE may be configured to transmit a message between the UE and the TN-CN device, and the NTN communication module may be configured to transmit a message between the UE and the NTN-CN device.

In a possible implementation, the UE includes the NTN communication module, and the NTN communication module is bound to a first SIM card. Before the UE receives the first registration accept message sent by the TN-CN device, the method further includes: The UE receives a first identity request message sent by the TN-CN device, where the first identity request message is used to obtain an identifier of a first SIM card; the UE sends a first identity response message to the TN-CN device, where the first identity response message includes the identifier of the first SIM card of the UE; the UE receives a first authentication request message sent by the TN-CN device, where the first authentication request message is used to perform authentication on the first SIM card; the UE sends a first authentication response message to the TN-CN device, where the first authentication response message includes an authentication response of the UE; the UE receives a first security mode command message sent by the TN-CN device, where the first security mode command message indicates the UE to perform security mode configuration on the first SIM card; and the UE sends a first security mode complete message to the TN-CN device, where the first security mode complete message is used to notify the NTN-CN device that the UE completes the security mode configuration on the first SIM card. In this way, the UE completes, in a TN, that the NTN-CN device obtains the identifier of the first SIM card of the UE, performs authentication on the first SIM card, and indicates the UE to perform security mode configuration, so that the UE does not need to perform these steps in an NTN, thereby reducing air interface overheads, registration time, and power consumption of the UE in the NTN.

In a possible implementation, that the UE sends the first registration request message to the TN-CN device specifically includes: The UE sends a first NAS message to the TN-CN device via the mobile communication module, where the first NAS message includes a first N1 non-terrestrial network container N1 TNT container, and the first N1 TNT container includes the first registration request message. In this way, the UE may send a message to the NTN-CN device via the TN-CN device.

In a possible implementation, that the UE receives the first registration accept message sent by the TN-CN device specifically includes: The UE receives, via the mobile communication module, a second NAS message sent by the TN-CN device, where the second NAS message includes a second N1 TNT container, and the second N1 TNT container includes the first registration accept message. In this way, the UE may receive, via the TN-CN device, a message sent by the NTN-CN device.

In a possible implementation, before the UE sends the first registration request message to the TN-CN device, the method further includes: The UE registers with the TN-CN device via the mobile communication module. In this way, after successfully registering with the TN-CN device, the UE may perform, in the TN-CN, the step of registering with the NTN-CN device.

In a possible implementation, that the UE sends the first registration request message to the TN-CN device specifically includes: The UE sends a third registration request message to the TN-CN device, where the third registration request message includes the first registration request message, and the third registration request message is used for the UE to register with the TN-CN device. In this way, when sending, to the TN-CN device, the third registration request message for registering with the TN-CN device, the UE may send, to the TN-CN device, the first registration request message for registering with the NTN-CN device, the TN-CN device may forward the first registration request message to the NTN-CN device, so that the UE can register with the NTN-CN device in the TN. In this way, when sending, to the TN-CN device, a request message for registering with the TN-CN device, the UE may also send, to the TN-CN device, a request message for registering with the NTN-CN device.

In a possible implementation, that the UE receives the first registration accept message sent by the TN-CN device specifically includes: The UE receives a third registration accept message sent by the TN-CN device, where the third registration accept message includes the first registration accept message, and the third registration accept message indicates the UE to register with the TN-CN device. In this way, when receiving a registration accept message that is sent by the TN-CN device and that indicates the UE to register with the TN-CN device, the UE may also receive a registration accept message that is sent by the TN-CN device and that indicates the UE to register with the NTN-CN device.

In a possible implementation, a registration type of the first registration request message is initial registration, and a registration type of the second registration request message is mobility registration.

According to a third aspect, this application provides a registration method, applied to a communication system. The communication system includes a user equipment UE, a non-terrestrial network core network NTN-CN device, and a terrestrial network core network TN-CN device. The method includes: The UE sends a first registration request message to the TN-CN device, where the first registration request message includes capability information indicating that the UE supports NTN communication, and the first registration request message is used for the UE to register with the TN-CN device; the TN-CN device sends a first registration accept message to the UE, where the first registration accept message includes an equivalent public land mobile network EPLMN of an NTN, and the first registration accept message indicates the UE successfully registers with the TN-CN device; and the UE searches for the NTN-RAN based on the EPLMN.

The UE sends a second registration request message to the NTN-CN device, where the second registration request message is used for the UE to register with the NTN-CN device; the NTN-CN device obtains a registration context of UE from the TN-CN device, where the registration context of the UE includes authentication information of the UE, security mode configuration of the UE, air interface capability information of the UE, paging capability information of the UE, and an aggregate maximum bit rate AMBR of the UE; the NTN-CN device sends a second registration accept message to the UE; and the UE receives the second registration accept message, and registers with the NTN-CN device.

In this way, the UE can access the NTN in a roaming manner, and does not need to perform a registration procedure with the NTN-CN in the NTN, thereby reducing time for the UE to register with a core network, air interface resources, and power consumption of the UE.

According to a fourth aspect, this application provides a user equipment, including a plurality of processors and one or more memories. The plurality of processors include a mobile communication module and an NTN communication module. The one or more memories are coupled to the plurality of processors. The one or more memories are configured to store a computer executable program. When the one or more processors execute the computer executable program, the terminal is enabled to perform the method according to the second aspect.

According to a fifth aspect, this application provides a computer-readable storage medium, storing a computer program. When the computer program is run on a processor of a computer, the computer is enabled to perform the method according to the second aspect.

According to a sixth aspect, this application provides a chip, used in user equipment, and including a plurality of modules. The plurality of modules include a mobile communication module and an NTN communication module, and the plurality of modules are configured to perform the method according to the second aspect.

### BRIEF DESCRIPTION OF DRAWINGS

FIG. 1 is a diagram of a communication system 10 according to an embodiment of this application;
FIG. 2A to FIG. 2C are a diagram of a registration and call procedure according to an embodiment of this application;
FIG. 3A and FIG. 3B are a schematic flowchart of a registration method according to an embodiment of this application;
FIG. 4A and FIG. 4B are a schematic flowchart according to an embodiment of this application;
FIG. 5 is a schematic flowchart of another registration method according to an embodiment of this application;
FIG. 6 is a schematic flowchart of another registration method according to an embodiment of this application; and
FIG. 7 is a diagram of a hardware structure of UE 100 according to an embodiment of this application.

### DESCRIPTION OF EMBODIMENTS

Technical solutions according to embodiments of this application are clearly and completely described in the following with reference to accompanying drawings. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A communication system provided in embodiments of this application is first described.

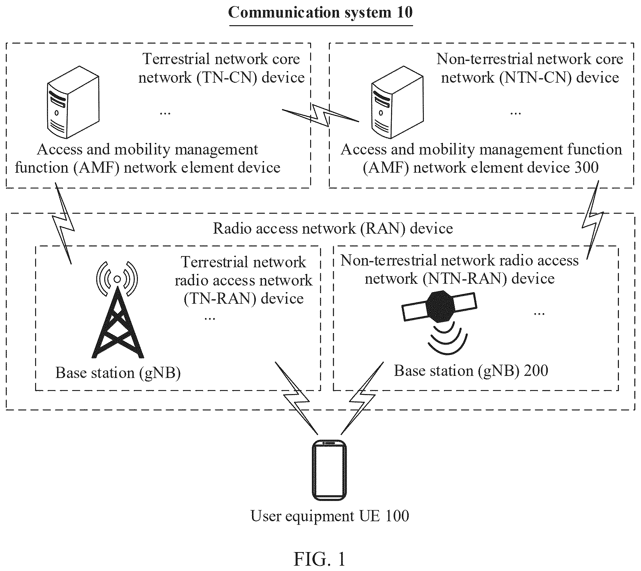

For example, as shown in FIG. 1, a communication system 10 may include but is not limited to a core network (core network, CN) device, one or more base stations (next generation NodeB, gNB), and user equipment UE 100. The core network device may be configured to: verify the user equipment, and provide a mobile communication service (for example, call control or data transmission) for the UE that accesses the core network device. The core network device may be classified into a terrestrial network core network (terrestrial network core network, TN-CN) device and a non-terrestrial network core network (non-terrestrial network core network, NTN-CN) device. The NTN-CN device may include but is not limited to an access and mobility management function (access and mobility management function, AMF) 300. The AMF 300 may be used for NTN core network registration management, UE mobility management control, context security management, and the like.

The one or more base stations may be referred to as radio access network (radio access network, RAN) devices. A radio access network device may be used by the UE to access the core network device. The radio access network device may be classified into a terrestrial network radio access network (terrestrial network radio access network, TN-RAN) device and a non-terrestrial network radio access network (non-terrestrial network radio access network, NTN-RAN) device. The UE 100 may access the TN-CN device via the TN-RAN device, and the TN-RAN device may include a ground base station shown in FIG. 1. The UE 100 may access the NTN-CN device via the NTN-RAN device, and the NTN-RAN device may include a base station 200 shown in FIG. 1. It should be noted that the base station 200 may include a satellite and a ground transceiver station. When the UE 100 sends data to the NTN-CN device, the UE 100 first sends the data to the satellite of the base station 200. After receiving the data sent by the UE 100, the satellite of the base station 200 may relay and forward, to the ground transceiver station, the data sent by the UE 100, and the ground transceiver station may transmit, to the NTN-CN device, the data sent by the UE 100. Similarly, when the NTN-CN device sends data to the UE 100, the NTN-CN device may first send the data to the ground transceiver station of the base station 200, the ground transceiver station may forward, to the satellite of the base station 200, the data sent by the NTN-CN device, and the satellite of the base station 200 may deliver the data of the NTN-CN device to the UE 100.

In embodiments of this application, the UE 100 may send a radio signal to the base station 200. After receiving the radio signal sent by the UE 100, the base station 200 may forward, to the AMF 300 on the ground, the radio signal sent by the UE 100. Similarly, the AMF 300 may send a radio signal to the base station 200. After receiving the radio signal sent by the AMF 300, the base station 200 may forward the radio signal to the UE 100. In this way, when the UE 100 is located in areas such as oceans, deserts, grasslands, or uninhabited regions where mobile communication is unavailable, insufficient, or where communication systems have been damaged, the UE 100 cannot receive signals of a terrestrial network, and may access a non-terrestrial network core network via a satellite base station and perform positioning and communication through a non-terrestrial network core network.

A transmission protocol of the communication system 10 includes an access stratum (access stratum, AS) protocol and a non-access stratum (non-access stratum, NAS) protocol. In the communication system 10, the UE 100 and the AMF 300 may communicate with each other according to a NAS protocol, the UE 100 and the base station 200 may communicate with each other according to an AS protocol, and the AMF 300 and the base station 200 may also communicate with each other according to the AS protocol. An AS protocol layer may include a physical (physical, PHY) layer, a media access control (medium access control, MAC) layer, a radio link control (radio link control, RLC) layer, a packet data convergence protocol (packet data convergence protocol, PDCP) layer, and a radio resource control (radio resource control, RRC) layer.

In the following descriptions, the NTN-CN device may be abbreviated as NTN-CN, the TN-CN device may be abbreviated as TN-CN, the NTN-RAN device may be abbreviated as NTN-RAN, and the TN-RAN device may be abbreviated as TN-RAN.

The following describes a registration and call procedure of a UE 100 in the NTN according to an embodiment of this application.

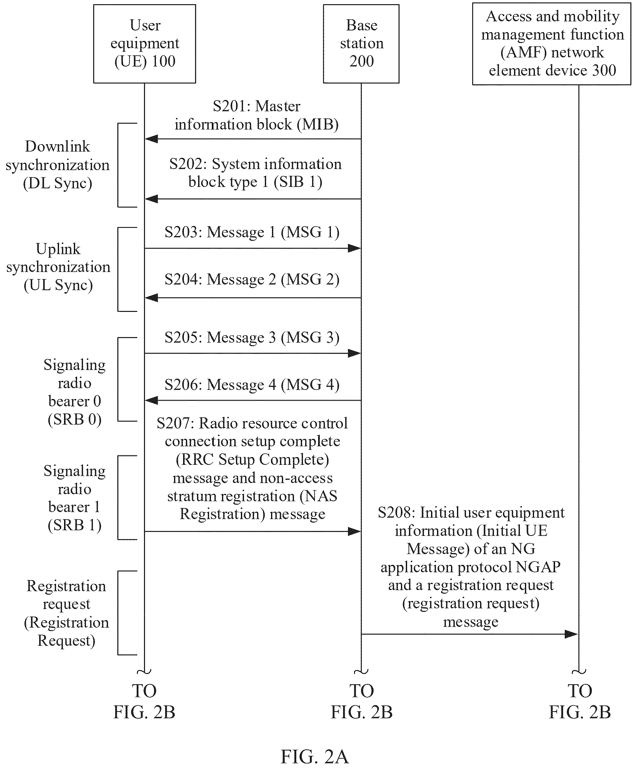

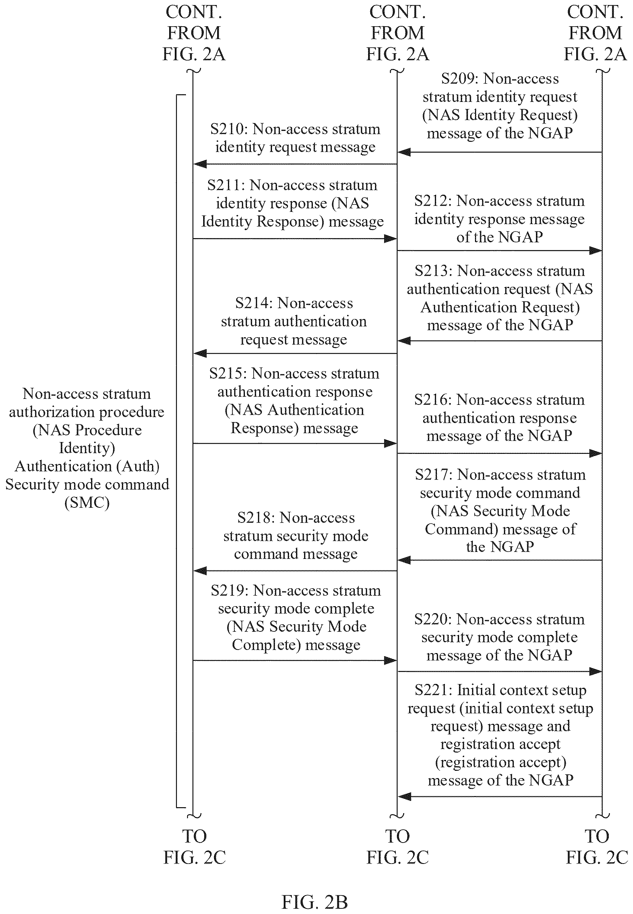

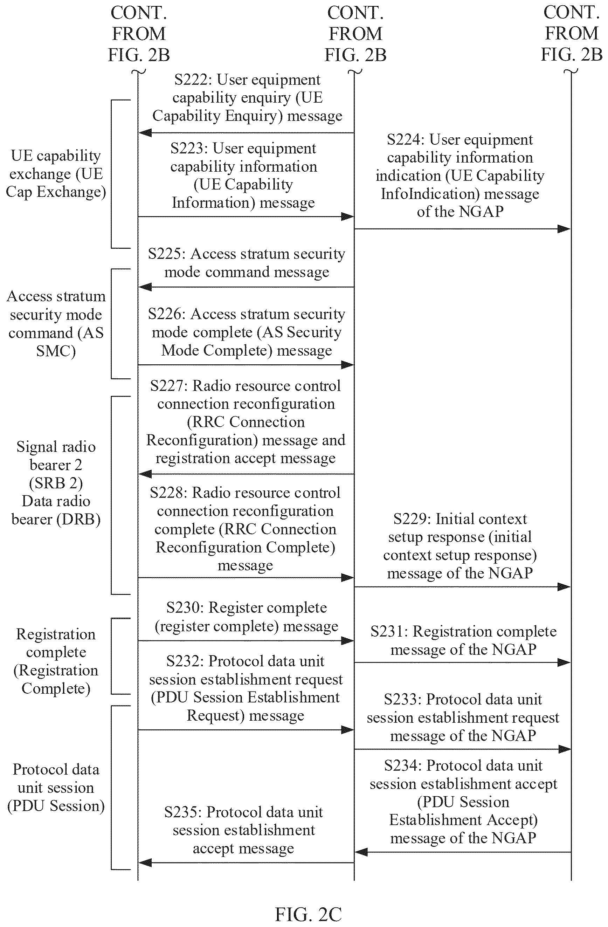

For example, as shown in FIG. 2A to FIG. 2C, the registration and call procedure includes the following steps.

### Phase 1: Downlink synchronization (downlink synchronize, DL Sync)

S201: The UE 100 receives a master information block (master information block, MIB) sent by a base station 200.

The base station 200 may send the MIB in a broadcast manner, and all UEs within a beam range of the base station 200 may receive the MIB sent by the base station 200. The MIB includes a demodulation parameter, a system bandwidth, a system frame number, and the like of a system information block type 1 (system information block type 1, SIB 1). The UE 100 may adjust, based on the MIB, a receiving frequency range of the UE 100 to a frequency range for receiving a downlink signal of the base station 200. The UE 100 may further adjust, based on the MIB, a time point at which the UE 100 receives a communication frame sent by the base station 200.

S202: The UE 100 receives the SIB 1 sent by the base station 200.

The SIB 1 may also be referred to as remaining minimum system information (remaining minimum system information, RMSI), and the base station 200 may send the SIB message in a broadcast manner. The UE 100 may obtain, based on the demodulation parameter indicated by the MIB, content of the SIB 1 sent by the base station 200 in a broadcast manner. The SIB 1 may include a receiving time parameter of another SIB message, and the parameter indicates a time point at which the UE 100 receives the another SIB.

In this way, after performing the steps in the phase 1, the UE 100 may implement downlink synchronization between the UE 100 and the base station 200, and the UE 100 may receive, in a frequency band indicated by the base station 200 and at time indicated by the base station 200, data sent by the base station 200.

### Phase 2: Uplink synchronization (uplink synchronize, UL Sync)

S203: The UE 100 sends a message 1 (message 1, MSG 1) to the base station 200.

The message 1 is a preamble sequence in an uplink synchronization process according to the 3rd generation partnership project (3rd generation partnership project, 3GPP). The UE 100 may obtain configuration information of a random access channel (random access channel, RACH) based on the SIB 1, and select, based on the obtained configuration information, a preamble sequence (preamble) corresponding to the configuration information. The UE 100 may implement uplink synchronization between the UE 100 and the base station 200 based on the preamble sequence, and the UE 100 may send an uplink signal to the base station 200. The message 1 may be referred to as a random access channel preamble sequence (RACH Preamble).

S204: The UE 100 receives a message 2 (message 2, MSG 2) sent by the base station 200.

After receiving the MSG 1 sent by the UE 100, the base station 200 may determine a transmission delay between the base station 200 and the UE 100 based on the MSG 1. Then, the base station 200 may determine a value of a timing advance command (timing advance command, TAM) field based on the transmission delay between the base station 200 and the UE 100. The timing advance command field is a field in the MSG 2, and indicates time at which the UE 100 sends uplink data. The base station 200 may send the MSG 2 including the TAM field to the UE 100. After receiving the MSG 2, the UE 100 may determine time for sending the uplink data to the base station 200. The message 2 may be referred to as a random access channel response (RACH Response).

In this way, after performing the steps in the phase 2, the UE 100 may implement uplink synchronization between the UE 100 and the base station 200, and the UE 100 may send, in a frequency band indicated by the base station 200 and at time indicated by the base station 200, data to the base station 200.

### Phase 3: Signaling radio bearer 0 (signaling radio bearer 0, SRB 0)

S205: The UE 100 sends a message 3 (message 3, MSG 3) to the base station 200

After receiving the MSG 2, the UE 100 may perform a step of setting up an RRC connection to the base station 200, and the UE 100 may transmit data at a NAS layer through the RRC connection. The UE 100 may send the MSG 3 to the base station 200 over an uplink common control channel (uplink common control channel, UL-CCCH) through the SRB 0 based on time that is for sending the uplink data and that is indicated by the MSG 2. The MSG 3 is an RRC setup request (RRC Setup Request). The SRB 0 may be used to carry the RRC message MSG 3.

S206: The UE 100 receives a message 4 (message 4, MSG 4) sent by the base station 200.

The base station 200 may receive the MSG 3 from the UE 100 at the time indicated by the MSG 2. After receiving the MSG 3, the base station 200 may determine whether the RRC connection is allowed to be set up, and set content of the MSG 4 based on a determining result. When the base station 200 does not allow to set up the RRC connection, the message 4 is a radio resource control reject (RRC Reject) message. When the base station 200 confirms to set up the RRC connection, the message 4 is a radio resource control setup (RRC Setup) message. The base station 200 may further include complete configuration of an SRB 1 in the RRC setup message, and the base station 200 may send the MSG 4 through the SRB 0. After receiving the RRC setup message, the UE 100 may set up the SRB 1 based on the message.

In this way, the UE 100 may set up the RRC connection after performing the steps in the phase 3.

### Phase 4: Signaling radio bearer 1 (signaling radio bearer 1, SRB 1)

S207: The UE 100 sends a radio resource control connection setup complete (RRC Setup Complete) message and a non-access stratum registration (NAS Registration) message to the base station 200.

After receiving the MSG 4, the UE 100 may configure the SRB 1 based on the MSG 4. After completing configuration of the SRB 1, the UE 100 may send an RRC setup complete message to the base station 200. The message is used by the UE 100 to confirm that the RRC connection has been successfully set up. The base station 200 may select an AMF after receiving the RRC setup complete message. Herein, the AMF selected by the base station 200 is the AMF 300 shown in FIG. 1.

The RRC Setup complete message carries the non-access stratum registration message, and the non-access stratum registration message may be used by the UE 100 to register with the AMF. The RRC setup complete message sent by the UE 100 to the base station 200 is carried on the SRB 1.

In this way, in the fourth phase, the UE 100 may send a NAS message to the base station 200 through the SRB 1, and the base station 200 may forward the NAS message of the UE 100 to the AMF 300.

### Phase 5: Registration request (registration request)

S208: The base station 200 sends initial user equipment information (Initial UE Message) of an NG application protocol (NG application protocol, NGAP) and a registration request (registration request) message to the AMF 300.

The NGAP may provide a signaling service for a RAN node and an AMF node, and may provide a signaling connection and a data connection for the UE to access a core network. After selecting the AMF 300, the base station 200 may send the initial UE message to the AMF 300. The message may be used to notify the AMF 300 that the UE 100 is to access the core network. The message includes a radio access network user equipment NG application protocol identity (radio access network user equipment identity, RAN UE NGAP ID) allocated by the base station 200 to the UE 100. The AMF 300 may transmit the NAS message to the UE 100 based on the RAN UE NGAP ID. The base station 200 may send, to the AMF 300 based on the initial UE message, the NAS message (namely, the registration request message) carried in the RRC setup complete message. The registration request message may be used to notify the AMF 300 that the UE 100 registers with the core network.

### Phase 6: Non-access stratum authorization procedure (NAS Procedure Identity), authentication (authentication, AUTH), and security mode command (security mode command, SMC)

S209: The AMF 300 sends a non-access stratum identity request (NAS Identity Request) message of the NGAP to the base station 200.

The non-access stratum identity request is used by the AMF 300 in the core network to obtain an identity of the UE 100.

S210: The base station 200 sends the non-access stratum identity request message to the UE 100.

After receiving the NAS message sent by the AMF 300, the base station 200 may forward the NAS message to the UE 100.

S211: The UE 100 sends a non-access stratum identity response (NAS Identity Response) message to the base station 200.

After receiving the NAS message from the AMF 300, the UE 100 may generate an identity response message, where the identity response message carries an identity indicated by the identity request message. For example, the identity may be an international mobile subscriber identity (international mobile subscriber identity, IMSI). The UE 100 may send the identity response message to the base station 200.

S212: The base station 200 sends a non-access stratum identity response message of the NGAP to the AMF 300.

After receiving the NAS message sent by the UE 100, the base station 200 may forward the NAS message to the AMF 300. After receiving the identity response message from the UE 100, the AMF 300 may perform step S213 based on the identity of the UE 100 carried in the identity response message.

S213: The AMF 300 sends an NGAP non-access stratum authentication request (NAS Authentication Request) message to the base station 200.

After receiving an identity identification parameter, the AMF 300 may generate an authentication parameter carried in the non-access stratum authentication request message. The authentication parameter may include but is not limited to a random number (random, RAND) generated by the AMF 300 via a random number generator, and an authentication token (authentication token, AUTN). The AMF 300 may send the non-access stratum authentication request message to the base station 200.

S214: The base station 200 sends the non-access stratum authentication request message to the UE 100.

S215: The UE 100 sends a non-access stratum authentication response (NAS Authentication Response) message to the base station 200.

After receiving, via the base station 200, the NAS authentication request message sent by the AMF 300, the UE 100 may obtain a response (response, RES) of the UE 100 through calculation based on the RAND and the AUTN in the authentication parameter. The UE 100 may send, to the base station 200, the non-access stratum authentication response message that carries the RES.

S216: The base station 200 sends a non-access stratum authentication response message of the NGAP to the AMF 300.

After receiving the non-access stratum authentication response message from the UE 100 via the base station 200, the AMF 300 may perform authorization on, based on the RES, whether the UE 100 is a valid terminal. When the AMF 300 determines that the UE 100 is the valid terminal (that is, authentication performed by the AMF 300 succeeds), the AMF 300 may provide a communication service for the UE 100.

S217: The AMF 300 sends a non-access stratum security mode command (NAS Security Mode Command) message of the NGAP to the base station 200.

The non-access stratum security mode command message may indicate the UE 100 to start integrity protection and data encryption.

S218: The base station 200 sends the non-access stratum security mode command message to the UE 100.

S219: The UE 100 sends a non-access stratum security mode complete (NAS Security Mode Complete) message to the base station 200.

The UE 100 may determine an integrity protection algorithm and an encryption algorithm based on the non-access stratum security mode command message. The UE 100 may encrypt the NAS message using the integrity and encryption algorithms. After receiving the non-access stratum security mode command message, the UE 100 may further send a non-access stratum security mode complete message to the base station 200, to indicate that the UE 100 completes security mode configuration.

S220: The base station 200 sends a non-access stratum security mode complete message of the NGAP to the AMF 300.

The AMF 300 may receive the non-access stratum security mode complete message from the UE 100 via the base station 200, and determine that the UE 100 encrypts the NAS message based on an agreed encryption algorithm.

S221: The AMF 300 sends an initial context setup request (initial context setup request) message and a registration accept (registration accept) message of the NGAP to the base station.

The AMF 300 may send the initial context setup request message to the base station 200, to start an initial context setup process. The message includes a registration accept message. The registration accept message is the NAS message.

In this way, in the sixth phase, the UE 100 and the AMF 300 may transparently transmit the NAS message via the base station 200, to complete identity query, authentication, NAS security mode setting, and a registration procedure of the UE 100.

### Phase 7: User equipment capability exchange (UE Capability Exchange)

S222: The base station 200 sends a user equipment capability enquiry (UE Capability Enquiry) message to the UE 100.

After receiving the initial context setup request message sent by the AMF 300, the base station 200 may send the user equipment capability query message to the UE 100, to start a capability query procedure of the UE 100. After obtaining the capability of the UE 100, the base station 200 may provide the UE 100 with a resource required by the UE 100.

S223: The UE 100 sends a user equipment capability information (UE Capability Information) message to the base station 200.

The UE 100 replies to the base station 200 with a UE capability information message, where the message carries capability information of the UE 100, and the capability information of the UE 100 may indicate a network supported by the UE 100, and the like.

S224: The base station 200 sends a user equipment capability information indication (UE Capability InfoIndication) message of the NGAP to the AMF 300.

The base station 200 sends the UE Capability InfoIndication message to the AMF 300, and the AMF 300 may store the capability information of the UE 100 based on the UE Capability InfoIndication message.

In this way, in the seventh phase, both the AMF 300 and the base station 200 obtain a capability of the UE 100, and may configure a corresponding function for the UE 100.

### Phase 8: Access stratum security mode command (access stratum security mode command, AS SMC)

S225: The base station 200 sends the access stratum security mode command message to the UE 100.

After reporting the capability of the UE 100 to the AMF 300, the base station 200 may send the access stratum security mode command message to the UE 100, to indicate the UE 100 to perform integrity protection and encryption on data, so that an RRC message can be securely transmitted between the UE 100 and the base station 200. The access stratum security mode command message may indicate a security key, an integrity key, an encryption algorithm, and an integrity protection algorithm that are used when a message is transmitted between the UE 100 and the base station 200. After the base station 200 sends the access stratum security mode command message, when sending data to the UE 100, the base station 200 may encrypt the data, set integrity protection for the data, and then send the encrypted and integrity-protected data to the UE 100.

S226: The UE 100 sends an access stratum security mode complete (AS Security Mode Complete) message to the base station 200.

After receiving the access stratum security mode command message sent by the base station 200, the UE 100 may send the access stratum security mode complete message to the base station 200, where integrity protection processing is performed on the access stratum security mode complete message. The UE 100 may start a security mode after sending the access stratum security mode complete message to the base station 200. In the security mode, the UE 100 performs integrity protection and encryption on data according to an algorithm agreed on by the UE 100 and the base station 200, and then sends integrity-protected and encrypted data to the base station 200.

In this way, after the eighth phase, the UE 100 and the base station 200 may encrypt and protect transmitted data through an agreed key, to ensure data transmission security.

### Phase 9: Signaling radio bearer 2 (signaling radio bearer 2, SRB 2) and data radio bearer (data radio bearer, DRB)

S227: The base station 200 sends a radio resource control connection reconfiguration (RRC Connection Reconfiguration) message and a registration accept message to the UE 100.

The base station 200 delivers an RRC connection reconfiguration message to the UE 100. The RRC connection reconfiguration message includes the registration accept message sent by the AMF and a parameter used to set up a radio bearer.

S228: The UE 100 sends a radio resource control connection reconfiguration complete (RRC Connection Reconfiguration Complete) message to the base station 200.

After receiving the RRC connection reconfiguration message, the UE 100 starts to set up the SRB 2 and the DRB. After the UE 100 successfully set up the SRB 2 and the DRB, the UE 100 may return an RRC connection reconfiguration complete message to the base station 200. The DRB may be used to transmit data of the UE 100, for example, a transmission control protocol (transmission control protocol, TCP) data packet/an internet protocol (internet protocol, IP) data packet.

S229: The base station 200 sends an initial context setup response (initial context setup response) message of the NGAP to the AMF 300.

After receiving the RRC connection reconfiguration complete message, the base station 200 may send an initial context setup response message to the AMF 300.

### Phase 10: Registration complete (register complete)

S230: The UE 100 sends a registration complete (register complete) message to the base station 200.

S231: The base station 200 sends a registration complete message of the NGAP to the AMF 300.

The base station 200 sends the registration complete message of the UE 100 to the AMF 300, and the UE 100 successfully registers with the core network.

In this way, after the steps in the foregoing 10 phases, the UE 100 successfully registers with the core network, and may send service data to the AMF 300 via the base station 200, or may receive service data from the AMF 300 via the base station 200.

### Phase 11: Protocol data unit session (protocol data unit session, PDU Session)

S232: The UE 100 sends a protocol data unit session establishment request (PDU Session Establishment Request) message to the base station 200.

The PDU session establishment request message is the NAS message.

S233: The base station 200 sends a protocol data unit session establishment request message of the NGAP to the AMF 300.

S234: The AMF 300 sends a protocol data unit session establishment accept (PDU Session Establishment Accept) message of the NGAP to the base station 200.

After receiving the protocol data unit session establishment request message from the UE 100 via the base station 200, the AMF 300 may allocate a resource of a PDU session connection to the UE 100, and send the protocol data unit session establishment accept message to the UE 100 via the base station 200.

S235: The base station 200 sends the protocol data unit session establishment accept message to the UE 100.

The UE 100 establishes a PDU session connection to the AMF 300, and may transmit a PDU packet through the connection.

In this way, the UE 100 successfully registers with a non-terrestrial network core network through step S201 to step S231. Before accessing a non-terrestrial network, the UE 100 needs to perform a registration procedure of the non-terrestrial network core network. When registering with the non-terrestrial network, the UE 100 needs to transmit data via the satellite base station. Because a distance between the UE 100 and the satellite base station is long, to avoid a case in which the satellite base station cannot transmit data to the UE 100, a bandwidth used by the satellite base station to transmit data is narrow, and a small amount of data is transmitted between the UE 100 and the satellite base station in unit time. In addition, because signaling interaction is frequent when the UE 100 registers with the non-terrestrial network, channel quality between the UE 100 and the satellite base station is poor, more time needs to be consumed for data transmission between the UE 100 and the satellite base station, power consumption of sending or receiving a satellite signal by the UE 100 is high, and duration for the UE 100 to register with the non-terrestrial network is long.

Embodiments of this application provide a registration method. The UE 100 includes an NTN communication module and a mobile communication module. The mobile communication module is bound to a subscriber identification module (subscriber identification module, SIM) 1, and the NTN communication module is bound to a SIM 2. The UE 100 may access a terrestrial network via the mobile communication module. The UE 100 may access a non-terrestrial network via the NTN communication module. The mobile communication module may obtain registration information of the NTN communication module. The registration information may be used by the NTN communication module to register with a non-terrestrial network core network. After the mobile communication module registers with a terrestrial network core network, the mobile communication module may send the registration information of the NTN communication module to the non-terrestrial network core network through the terrestrial network core network. The NTN communication module may perform a registration procedure of the non-terrestrial network core network via the mobile communication module and the terrestrial network core network. The NTN communication module of the UE 100 may access the non-terrestrial network core network after finding a base station of the NTN.

In this way, after successfully registering with the terrestrial network core network, the UE 100 may perform the registration procedure of the non-terrestrial network in the terrestrial network. After the UE 100 finds the non-terrestrial network, because the UE 100 has performed the registration procedure of the non-terrestrial network in the terrestrial network, and the non-terrestrial network core network stores registration information of the UE 100, the UE 100 can access the non-terrestrial network core network without performing the registration procedure in the non-terrestrial network. This reduces signaling overheads between the UE 100 and the non-terrestrial network core network, time required for the UE 100 to perform the registration procedure in the non-terrestrial network, and power consumption of the UE 100.

It should be noted that binding the NTN communication module and the mobile communication module of the UE 100 to the SIM is merely an example, and the NTN communication module and the mobile communication module of the UE 100 may alternatively be bound to an embedded subscriber identification module (embedded subscriber identification module, eSIM). This is not limited in embodiments of this application.

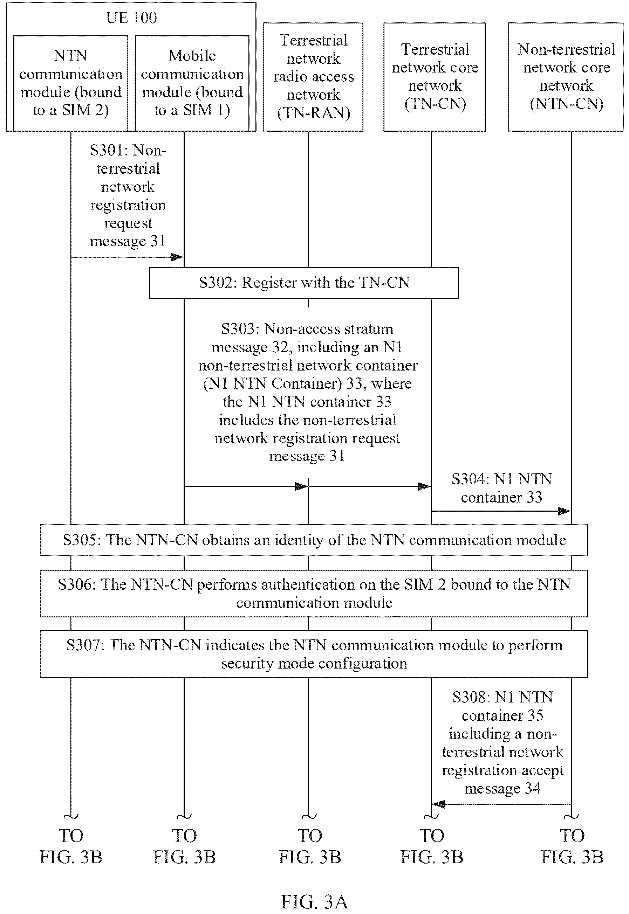

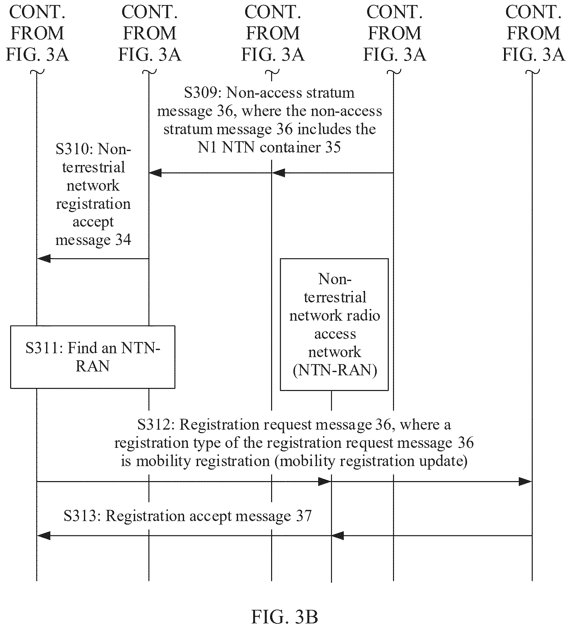

For example, as shown in FIG. 3A and FIG. 3B, the registration method provided in this embodiment of this application includes the following steps.

S301: A mobile communication module of UE 100 obtains a non-terrestrial network registration request (NTN registration request) message 31 of an NTN communication module of the UE 100, where a registration type of the non-terrestrial network registration request message 31 is initial registration (initial registration).

Before initiating TN registration, the mobile communication module may obtain registration request information of the NTN communication module. For example, data may be transmitted between the mobile communication module and the NTN communication module according to a NAS layer protocol, and the mobile communication module may obtain the non-terrestrial network registration request message 31 of the NTN communication module according to the NAS layer protocol. The non-terrestrial network registration request message 31 may be used to trigger the NTN-CN to start a registration procedure. The NTN communication module of the UE 100 is not registered with the NTN-CN after being powered on, and initiates an initial registration request. For example, the non-terrestrial network registration request message 31 may be represented as NTN registration request (initial registration).

S302: The mobile communication module registers with a TN-CN through a TN-RAN.

The UE 100 may register with the TN-CN after being powered on. The mobile communication module performs a network registration operation on the TN-CN. For specific descriptions of registering the mobile communication module with the TN-CN through the TN-RAN, refer to the embodiment in which the UE 100 registers with the NTN-CN through the NTN-RAN shown in FIG. 2A to FIG. 2C. Details are not described herein again. The mobile communication module is successfully registered with the TN-CN.

Optionally, the mobile communication module may obtain the registration request message 31 of the NTN communication module after successfully registering with the TN-CN.

S303: The mobile communication module sends a non-access stratum message (NAS message) 32 to the TN-CN through the TN-RAN, where the non-access stratum message 32 includes an N1 non-terrestrial network container (n1 interface non-terrestrial network container, N1 NTN Container) 33, and the N1 NTN container 33 includes the non-terrestrial network registration request message 31.

The N1 interface is a communication interface between the UE 100 and an AMF 300 of the NTN, and the N1 NTN container may be used to carry data sent by the UE 100 to the AMF 300. For example, the non-access stratum message 32 may be represented as a NAS message (N1 NTN Container (NTN registration request (initial registration))).

S304. The TN-CN sends the N1 NTN container 33 to the NTN-CN.

The TN-CN may send the N1 NTN container 33 to the NTN-CN based on information about subscribing the NTN by a SIM 2, for example, a public land mobile network (public land mobile network, PLMN) of an NTN of a SIM 2. Specifically, the AMF of the TN-CN may send the N1 NTN container 33 to the AMF 300 of the NTN-CN. The TN-CN includes a subscriber server, and the subscriber server may be configured to provide an NTN subscription service. The SIM 2 may obtain the NTN subscription service through an operator of the TN-CN. The AMF of the TN-CN may obtain the information about the subscribed NTN of the SIM 2 from the subscription server of the TN-CN.

S305: The NTN-CN obtains an identity of the NTN communication module.

The AMF 300 of the NTN-CN may obtain the identity of the NTN communication module through the TN-CN, the TN-RAN, and the mobile communication module. Herein, the identity of the NTN communication module is an identifier of the SIM 2. For example, the identifier of the SIM 2 may be a subscriber concealed identifier (subscriber concealed identifier, SUCI). The AMF 300 may determine the identity of the NTN communication module based on the SUCI.

S306: The NTN-CN performs authentication on the SIM 2 bound to the NTN communication module.

Authentication signaling may be transmitted between the NTN-CN and the NTN communication module through the TN-CN, the TN-RAN, and the mobile communication module, so that the AMF 300 of the NTN-CN performs authentication on the SIM 2 of the UE 100.

S307: The NTN-CN indicates the NTN communication module to perform security mode configuration.

Signaling of the security mode command may be transmitted between the NTN-CN and the NTN communication module through the TN-CN, the TN-RAN, and the mobile communication module, so that the AMF 300 of the NTN-CN performs a security mode command operation on the UE 100. Data transmission security may be ensured between the UE 100 and the AMF 300 according to an agreed encryption algorithm and an agreed integrity algorithm.

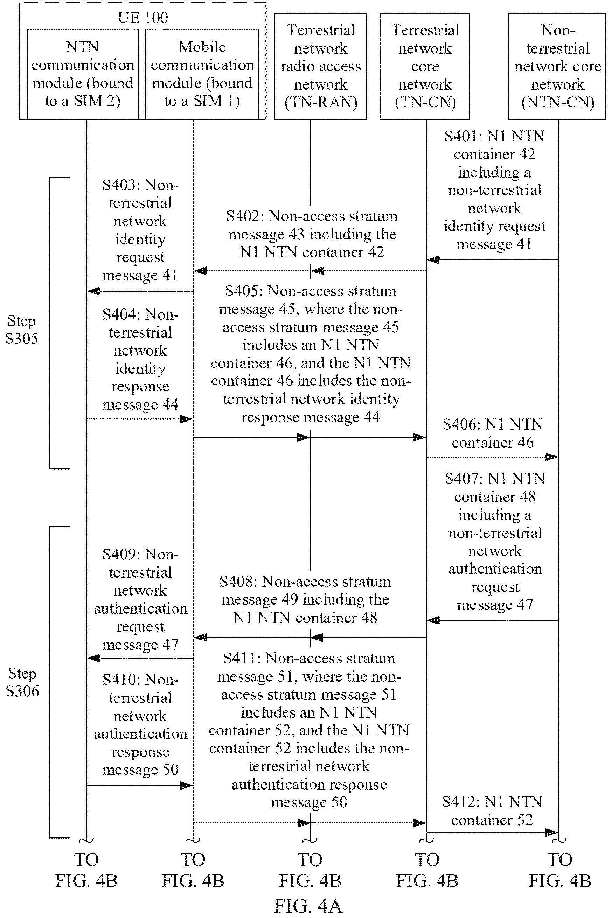

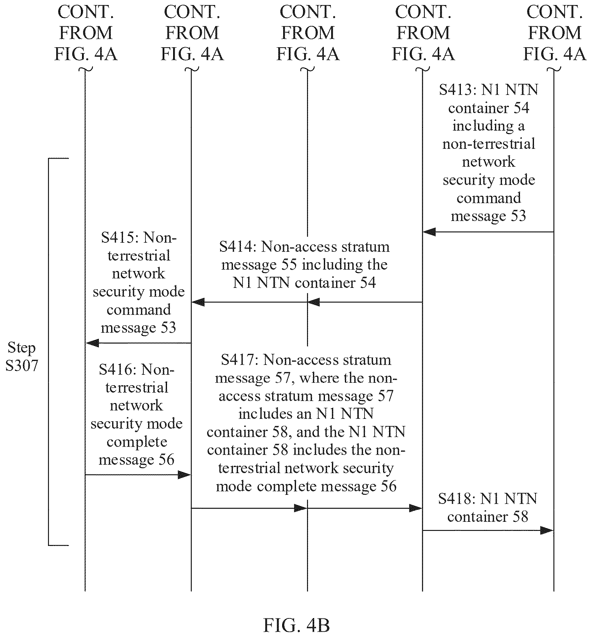

Specifically, for specific descriptions of step S305 to step S307, refer to the embodiment shown in FIG. 4A and FIG. 4B.

S308: The NTN-CN sends an N1 NTN container 35 including a non-terrestrial network registration accept (NTN registration accept) message 34 to the TN-CN.

After the identity authorization of the UE 100 succeeds, the authentication succeeds, and the security mode configuration is successfully performed, the AMF 300 of the NTN-CN may send the non-terrestrial network registration accept message 34 to the UE 100. The non-terrestrial network registration accept message 34 may indicate that the AMF 300 of the NTN-CN accepts the registration request of the UE 100. The AMF 30 may add the non-terrestrial network registration accept message 34 to the N1 NTN container 35, and then send the N1 NTN container 35 to the AMF of the TN-CN.

S309: The TN-CN sends a non-access stratum message 36 to the mobile communication module of the UE 100 through the TN-RAN, where the non-access stratum message 36 includes the N1 NTN container 35.

The AMF of the TN-CN may pack the N1 NTN container 35 to obtain a non-access stratum message 36, and send the non-access stratum message 36 to the mobile communication module through the TN-CN.

S310: The mobile communication module sends the non-terrestrial network registration accept message 34 to the NTN communication module.

After receiving the non-access stratum message 36, the mobile communication module may obtain the non-terrestrial network registration accept message 34 from the non-access stratum message 36, and send the non-terrestrial network registration accept message 34 to the NTN communication module.

S311: The UE 100 finds an NTN-RAN.

The UE 100 searches for the NTN-RAN (for example, a base station 200) based on the PLMN information stored in the NTN communication module. The UE 100 may set up an RRC connection to the base station 200 of the NTN-RAN. For details, refer to the embodiment shown in FIG. 2A to FIG. 2C. Details are not described herein again.

It should be noted that, before the UE 100 searches for the NTN-RAN, the UE 100 needs to perform a satellite alignment operation, to align an antenna radiation direction of the UE 100 with a satellite transmission link direction of the base station 200. The UE 100 may display satellite alignment prompt information, indicating a user to align an antenna radiation direction of the UE 100 with a satellite transmission link direction of the base station 200. After successfully aligning with the satellite, the UE 100 may receive a satellite signal with strong signal quality.

S312: The NTN communication module of the UE 100 sends a registration request message 36 to the NTN-CN through the NTN-RAN, where a registration type of the registration request message 36 is mobility registration (mobility registration update).

The NTN communication module of the UE 100 sends, to the AMF 300 of the NTN-CN via the base station 200 of the NTN-RAN, the registration request message 36 whose registration type is mobility registration. For example, the registration request message 36 may be represented as registration request (mobility registration update). The registration request message 36 includes the identity of the NTN communication module.

S313: The NTN-CN sends a registration accept message 37 to the NTN communication module through the NTN-RAN.

After receiving the registration request message 36 sent by the UE 100, the NTN-CN may determine, based on the identity of the NTN communication module, that a registration context of the NTN communication module of the UE 100 is stored, the NTN-CN does not need to perform the authorization procedure shown in step S305 to step S307, determines that the UE 100 is successfully registered, and sends the registration accept message 37 to the NTN communication module of the UE 100 via the base station 200 of the NTN-RAN.

In this way, when the UE 100 is handed over from the TN to the NTN, the UE 100 can access the NTN-CN without performing a registration procedure of the UE 100 in the NTN, thereby reducing registration time, air interface resources, and power consumption of a device.

As shown in FIG. 4A and FIG. 4B, step S305 to step S307 in the embodiment shown in FIG. 3A and FIG. 3B include the following sub-steps.

S401: An NTN-CN sends, to a TN-CN, an N1 NTN container 42 including a non-terrestrial network identity request (non-terrestrial network identity request, NTN identity request) message 41.

After receiving the N1 NTN container 33 sent by the TN-CN, the NTN-CN may obtain a non-terrestrial network registration request message 31 from an N1 NTN container 33. After receiving the non-terrestrial network registration request message 31, the NTN-CN may obtain an identity of an NTN communication module of the UE 100. Herein, the NTN-CN may send the N1 NTN container 42 including the non-terrestrial network identity request message 41 to the TN-CN. For example, the N1 NTN container 42 may be N1 NTN container (NTN identity request).

S402: The TN-CN sends a non-access stratum message 43 including the N1 NTN container 42 to a mobile communication module of the UE 100 through a TN-RAN.

The TN-CN may encapsulate the N1 NTN container 42 into the non-access stratum message 43, and send the non-access stratum message 43 to the mobile communication module of the UE 100 through the TN-RAN. For example, the non-access stratum message 43 may be a NAS message (N1 NTN container (NTN identity request)).

S403: The mobile communication module of the UE 100 sends the non-terrestrial network identity request message 41 to the NTN communication module of the UE 100.

The non-access stratum message 43 includes an identity of the mobile communication module of the UE 100. The UE 100 may determine, based on the identity of the mobile communication module, that the non-access stratum message 43 is a message sent by the TN-CN to the UE 100. After receiving the non-access stratum message 43 via the mobile communication module, the UE 100 may send the non-terrestrial network identity request message 41 in the non-access stratum message 43 to the NTN communication module.

S404: The NTN communication module sends a non-terrestrial network identity response (non-terrestrial network identity response, NTN identity response) message 44 to the mobile communication module.

After receiving the non-terrestrial network identity request message 41, the NTN communication module may generate the non-terrestrial network identity response message 44 based on the identity of the NTN communication module, and send the non-terrestrial network identity response message 44 to the mobile communication module.

S405: The mobile communication module sends a non-access stratum message 45 to the TN-CN through the TN-RAN, where the non-access stratum message 45 includes an N1 NTN container 46, and the N1 NTN container 46 includes the non-terrestrial network identity response message 44.

The mobile communication module may obtain the non-access stratum message 45 through encapsulation based on the non-terrestrial network identity response message 44. For example, the non-access stratum message 45 may be a NAS message (N1 NTN Container (NTN identity response)).

S406. The TN-CN sends the N1 NTN container 46 to the NTN-CN.

After receiving the non-access stratum message 45, the TN-CN may send the N1 NTN container 46 to the NTN-CN, and the NTN-CN may obtain the identity of the NTN communication module of the UE 100.

Sub-step S401 to sub-step S406 belong to step S305. For descriptions of sub-step S401 to sub-step S406, refer to the embodiment shown in FIG. 2A to FIG. 2C. Details are not described herein again.

S407: The NTN-CN sends an N1 NTN container 48 including a non-terrestrial network authentication request (non-terrestrial network authentication request, NTN authentication request) message 47 to the TN-CN.

After receiving the identity of the NTN communication module, the NTN-CN may perform authentication on the NTN communication module. The NTN-CN may send the N1 NTN container 48 including the non-terrestrial network authentication request message 47 to the TN-CN. For example, the N1 NTN container 48 may be N1 NTN container (NTN authentication request).

S408: The TN-CN sends a NAS message 49 including the N1 NTN container 48 to the mobile communication module of the UE 100 through the TN-RAN.

The TN-CN may encapsulate the N1 NTN container 48 into the non-access stratum message 49, and send the non-access stratum message 49 to the mobile communication module of the UE 100 through the TN-RAN. For example, the non-access stratum message 49 may be a NAS message (N1 NTN container (NTN authentication request)).

S409: The mobile communication module of the UE 100 sends the non-terrestrial network authentication request message 47 to the NTN communication module of the UE 100.

The non-access stratum message 49 includes the identity of the mobile communication module of the UE 100. The UE 100 may determine, based on the identity of the mobile communication module, that the non-access stratum message 49 is a message sent by the TN-CN to the UE 100. After receiving the non-access stratum message 49 via the mobile communication module, the UE 100 may send the non-terrestrial network authentication request message 47 in the non-access stratum message 49 to the NTN communication module.

S410: The NTN communication module sends a non-terrestrial network authentication response (non-terrestrial network authentication response, NTN authentication response) message 50 to the mobile communication module.

After receiving the non-terrestrial network authentication request message 47, the NTN communication module may obtain an authentication response through calculation based on an authentication parameter of the SIM 2 and an authentication parameter of the non-terrestrial network authentication request message 47 according to an authentication algorithm, generate a non-terrestrial network authentication response message 50 based on the authentication response, and send the non-terrestrial network authentication response message 50 to the mobile communication module.

S411: The mobile communication module sends a non-access stratum message 51 to a TN-CN through a TN-RAN, where the non-access stratum message 51 includes an N1 NTN container 52, and the N1 NTN container 52 includes the non-terrestrial network authentication response message 50.

The mobile communication module may obtain the non-access stratum message 51 through encapsulation based on the non-terrestrial network authentication response message 50. For example, the non-access stratum message 51 may be a NAS message (N1 NTN Container (NTN authentication response)).

S412: The TN-CN sends the N1 NTN container 52 to the NTN-CN.

After receiving the non-access stratum message 51, the TN-CN may send the N1 NTN container 52 to the NTN-CN. An AMF 300 of the NTN-CN may obtain the non-terrestrial network authentication response message 50 of the UE 100, obtain an authentication response based on the non-terrestrial network authentication response message 50, and determine whether authentication on the UE 100 succeeds. Herein, authentication performed by the AMF 300 on the UE 100 succeeds.

Sub-step S407 to sub-step S412 belong to step S306. For descriptions of sub-step S407 to sub-step S412, refer to the embodiment shown in FIG. 2A to FIG. 2C. Details are not described herein again.

S413: The NTN-CN sends an N1 NTN container 54 including a non-terrestrial network security mode command (non-terrestrial network security mode command, NTN security mode command) message 53 to the TN-CN.

After receiving the non-terrestrial network authentication response message 50, the NTN-CN may indicate the UE 100 to perform security mode configuration. Herein, the NTN-CN may send the N1 NTN container 54 including the non-terrestrial network security mode command message 53 to the TN-CN. For example, the N1 NTN container 54 may be N1 NTN container (NTN security mode command).

S414: The TN-CN sends a NAS message 55 including the N1 NTN container 54 to the mobile communication module of the UE 100 through the TN-RAN.

The TN-CN may encapsulate the N1 NTN container 54 into the non-access stratum message 55, and send the non-access stratum message 55 to the mobile communication module of the UE 100 through the TN-RAN. For example, the non-access stratum message 55 may be a NAS message (N1 NTN container (NTN security mode command)).

S415: The mobile communication module of the UE 100 sends a non-terrestrial network security mode command message 53 to the NTN communication module of the UE 100.

The non-access stratum message 55 includes the identity of the mobile communication module of the UE 100. The UE 100 may determine, based on the identity of the mobile communication module, that the non-access stratum message 55 is a message sent by the TN-CN to the UE 100. After receiving the non-access stratum message 55 via the mobile communication module, the UE 100 may send the non-terrestrial network security mode command message 53 in the non-access stratum message 55 to the NTN communication module.

S416: The NTN communication module sends a non-terrestrial network security mode complete (NTN security mode complete) message 56 to the mobile communication module.

After receiving the non-terrestrial network security mode command message 53, the NTN communication module may determine an encryption algorithm and an integrity algorithm, and the UE 100 may process, according to the obtained encryption algorithm and integrity algorithm, the uplink data to be sent to the NTN-CN. After receiving the non-terrestrial network security mode command message 53, the NTN communication module may further generate the non-terrestrial network security mode complete message 56, and send the non-terrestrial network security mode complete message 56 to the mobile communication module.

S417: The mobile communication module sends a non-access stratum message 57 to the TN-CN through the TN-RAN, where the non-access stratum message 57 includes an N1 NTN container 58, and the N1 NTN container 58 includes the non-terrestrial network security mode command complete message 56.

The mobile communication module may obtain the non-access stratum message 57 through encapsulation based on the non-terrestrial network security mode complete message 56. For example, the non-access stratum message 57 may be a NAS message (N1 NTN Container (NTN security mode complete)).

S418: The TN-CN sends the N1 NTN container 58 to the NTN-CN.

After receiving the non-access stratum message 57, the TN-CN may send the N1 NTN container 58 to the NTN-CN, and the NTN-CN may determine that a security mode command operation is completed.

Sub-step S413 to sub-step S418 belong to step S307. For descriptions of sub-step S413 to sub-step S418, refer to the embodiment shown in FIG. 2A to FIG. 2C. Details are not described herein again.

In a possible implementation, in a process of registering with the terrestrial network, the mobile communication module may perform a procedure in which the NTN communication module registers with the non-terrestrial network. When sending a terrestrial network registration request message to the TN-CN, the mobile communication module may send a non-terrestrial network registration request message of the NTN communication module to the TN-CN, the TN-CN may send the non-terrestrial network registration request message of the NTN communication module to the NTN-CN. When sending a terrestrial network registration complete message to the mobile communication module, the TN-CN may send the non-terrestrial network registration complete message of the NTN-CN to the mobile communication module, and the mobile communication module may send the non-terrestrial network registration complete message to the NTN communication module.

In this way, when sending, to the TN-CN, signaling for registering with the terrestrial network core network, the mobile communication module can include the signaling for registering with the non-terrestrial network core network by the NTN communication module, so that signaling overheads are reduced. In a process in which the mobile communication module registers with the terrestrial network, the NTN communication module may register with the non-terrestrial network via the mobile communication module and the TN-CN, and the NTN-CN may obtain registration information of the NTN communication module. After the UE 100 finds a non-terrestrial network radio access network device, the NTN communication module may register with the non-terrestrial network without performing complex identity authorization, authentication, and security mode command procedures. This reduces network registration time, and power consumption of sending satellite data and receiving satellite data by the UE 100.

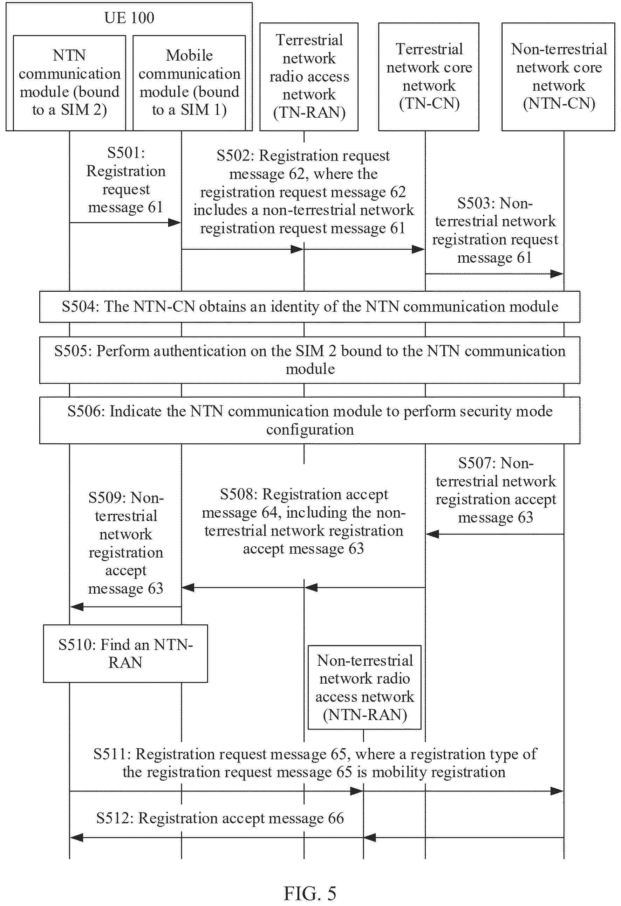

For example, as shown in FIG. 5, the registration method includes the following steps.

S501: A mobile communication module of UE 100 obtains a registration request (registration request) message 61 of an NTN communication module of the UE 100.

S502: The mobile communication module sends a registration request message 62 to a TN-CN through a TN-RAN, where the registration request message 62 includes a non-terrestrial network registration request message 61.

The registration request message 62 is used by the mobile communication module to register with a TN. The non-terrestrial network registration request message 61 is used by the NTN communication module to register with an NTN. A registration type of the non-terrestrial network registration request message 61 is initial registration. For example, the registration request message 61 may be a registration request (NTN registration request (initial registration)).

S503: The TN-CN sends the non-terrestrial network registration request message 61 to an NTN-CN.

The TN-CN may send the non-terrestrial network registration request message 61 to the NTN-CN based on information about the subscribed NTN of a SIM 2, for example, a PLMN of the NTN of the SIM 2. Specifically, an AMF of the TN-CN may send the non-terrestrial network registration request message 61 to an AMF 300 of the NTN-CN. For specific descriptions of step S503, refer to the descriptions of step S304 shown in FIG. 3A and FIG. 3B. Details are not described herein again.

S504: The NTN-CN obtains an identity of the NTN communication module.

S505: The NTN-CN performs authentication on the SIM 2 bound to the NTN communication module.

S506: The NTN-CN indicates the NTN communication module to perform security mode configuration.

Before the NTN-CN obtains the identity of the NTN communication module, the TN-CN first performs operations of obtaining an identity of the mobile communication module, performing authentication on a SIM 1 bound to the mobile communication module, and indicating the mobile communication module to perform security mode configuration. After the TN-CN determines that the mobile communication module completes security mode configuration, the NTN-CN may perform operations of obtaining the identity of the NTN communication module through the TN-CN, the TN-RAN, and the mobile communication module, performing authentication on the SIM 2 bound to the NTN communication module, and indicating the NTN communication module to perform security mode configuration.

Specifically, after receiving the non-terrestrial network registration request message 61, the NTN-CN may send a non-terrestrial network identity request message 11 to the TN-CN. The non-terrestrial network identity request message 11 is used by the NTN-CN to obtain the identity of the NTN communication module.

After receiving the registration request message 62, the TN-CN may send an identity request message 12 to the mobile communication module of the UE 100 through the TN-RAN. The identity request message 12 is used by the TN-CN to obtain the identity of the mobile communication module.

Then, the TN-CN may receive the identity from the mobile communication module through the TN-RAN. After receiving the identity of the mobile communication module, the TN-CN may perform operations of performing authentication on the SIM 1 bound to the mobile communication module and indicating the mobile communication module to perform security mode configuration. For details, refer to the embodiment shown in FIG. 2A to FIG. 2C. Details are not described herein again.

When determining that the mobile communication module completes security mode configuration, the TN-CN may send the non-terrestrial network identity request message 11 to the NTN communication module through the TN-RAN and the mobile communication module. After receiving the non-terrestrial network identity request message 11, the NTN communication module may send the identity of the NTN communication module to the NTN-CN through the TN-RAN and the TN-CN. After receiving the identity of the NTN communication module, the NTN-CN may perform operations of performing authentication on the SIM 2 bound to the NTN communication module and indicating the NTN communication module to perform security mode configuration. For details, refer to the descriptions of step S305 to step S307 in the embodiment shown in FIG. 4A and FIG. 4B. Details are not described herein again.

In some other examples, when performing an identity authorization procedure for the terrestrial network, the mobile communication module may perform an identity authorization procedure performed by the NTN communication module for the non-terrestrial network. When performing an authentication procedure for the terrestrial network, the mobile communication module may perform an authentication procedure performed by the NTN communication module for the non-terrestrial network. When performing a security mode configuration procedure for the terrestrial network, the mobile communication module may further perform a security mode configuration procedure performed by the NTN communication module for the non-terrestrial network.

Specifically, in a process of obtaining the identity of the mobile communication module, the TN-CN may carry signaling used by the NTN-CN to obtain the identity of the NTN communication module. In this way, the NTN-CN may obtain the identity of the NTN communication module through the TN-CN.

For example, the NTN-CN may send a non-terrestrial network identity request message 71 to the TN-CN, and the non-terrestrial network identity request message 71 is used by the NTN-CN to obtain the identity of the NTN communication module. The TN-CN may add the non-terrestrial network identity request message 71 to an identity request message 72. The identity request message 72 is used by the TN-CN to obtain the identity of the mobile communication module. The TN-CN may send the identity request message 72 to the mobile communication module of the UE 100 through the TN-RAN. The mobile communication module of the UE 100 may send the non-terrestrial network identity request message 71 to the NTN communication module.

Then, the NTN communication module may generate a non-terrestrial network identity response message 73 based on the identity of the NTN communication module. The NTN communication module may send the non-terrestrial network identity response message 73 to the mobile communication module. The mobile communication module may add the non-terrestrial network identity response message 73 to an identity response message 74, and the identity response message 74 further includes the identity of the mobile communication module. The mobile communication module may send the identity response message 74 to the TN-CN through the TN-RAN. The TN-CN obtains the identity of the mobile communication module, and sends the non-terrestrial network identity response message 73 to the NTN-CN. The NTN-CN obtains the identity of the NTN communication module.

The TN-CN may carry, in a process of performing authentication on the mobile communication module, signaling used by the NTN-CN to perform authentication on the NTN communication module. In this way, the NTN-CN may perform authentication on the NTN communication module through the TN-CN.

For example, the NTN-CN may send a non-terrestrial network authentication request message 75 to the TN-CN, and the non-terrestrial network authentication request message 75 is used by the NTN-CN to perform authentication on the SIM 2 of the NTN communication module. The TN-CN may add the non-terrestrial network authentication request message 75 to an authentication request message 76. The authentication request message 76 is used by the TN-CN to perform authentication on the SIM 1 of the mobile communication module. The TN-CN may send the authentication request message 76 to the mobile communication module of the UE 100 through the TN-RAN. The mobile communication module of the UE 100 may send the non-terrestrial network authentication request message 75 to the NTN communication module.

Then, the NTN communication module may generate a non-terrestrial network authentication response message 77 based on the non-terrestrial network authentication request message 75. The NTN communication module may send the non-terrestrial network authentication response message 77 to the mobile communication module. The mobile communication module may add the non-terrestrial network authentication response message 77 to an authentication response message 78, and the authentication response message 78 further includes authentication response information of the mobile communication module. The mobile communication module may send the authentication response message 78 to the TN-CN through the TN-RAN. The TN-CN obtains the authentication response of the mobile communication module, and sends the non-terrestrial network authentication response message 77 to the NTN-CN. The NTN-CN obtains authentication response of the NTN communication module, and determines, based on the authentication response of the NTN communication module, whether authentication on the SIM 2 succeeds. Herein, the authentication on the SIM 2 by the NTN-CN succeeds.

In a process of performing security mode configuration on the mobile communication module, the TN-CN may carry signaling used by the NTN-CN to perform security mode configuration on the NTN communication module. In this way, the NTN-CN may perform security mode configuration on the NTN communication module through the TN-CN.

For example, the NTN-CN may send a non-terrestrial network security mode command message 79 to the TN-CN, and the non-terrestrial network security mode command message 79 is used by the NTN-CN to perform security mode configuration on the NTN communication module. The TN-CN may add the non-terrestrial network security mode command message 79 to a security mode command message 80. The security mode command message 80 is used by the TN-CN to perform security mode configuration on the mobile communication module. The TN-CN may send the security mode command message 80 to the mobile communication module of the UE 100 through the TN-RAN. The mobile communication module of the UE 100 may send the non-terrestrial network security mode command message 79 to the NTN communication module.

Then, the NTN communication module may generate a non-terrestrial network security mode complete message 81 based on the non-terrestrial network security mode command message 79. The NTN communication module may send the non-terrestrial network security mode complete message 81 to the mobile communication module. The mobile communication module may add the non-terrestrial network security mode complete message 81 to a security mode complete message 82. The security mode complete message 82 further indicates that setting of the security mode of the SIM is completed. The mobile communication module may send the security mode complete message 82 to the TN-CN through the TN-RAN. The TN-CN determines that the security mode setting of the mobile communication module is completed, and sends the non-terrestrial network security mode complete message 81 to the NTN-CN. The NTN-CN determines, based on the non-terrestrial network security mode complete message 81, that the NTN communication module completes security mode setting.

S507: The NTN-CN sends a non-terrestrial network registration accept message 63 to the TN-CN.

After the NTN communication module completes security mode setting, the NTN-CN may generate the non-terrestrial network registration accept message 63, to notify the NTN communication module of the UE 100 that the NTN communication module successfully registers with the NTN-CN. The NTN-CN sends the non-terrestrial network registration accept message 63 to the TN-CN.

S508: The TN-CN sends a registration accept message 64 to the mobile communication module of the UE 100 through the TN-RAN, where the registration accept message 64 includes the non-terrestrial network registration accept message 63.

After receiving the non-terrestrial network registration accept message 63 from the NTN-CN, the TN-CN adds the non-terrestrial network registration accept message 63 to the registration accept message 64. The registration accept message 64 is used to notify that the mobile communication module of the UE 100 successfully registers with the TN-CN. The TN-CN sends the registration accept message 64 to the mobile communication module of the UE 100 through the TN-RAN.

S509: The mobile communication module sends the non-terrestrial network registration accept message 63 to the NTN communication module.

After receiving the registration accept message 64 of the TN-CN, the mobile communication module may send, to the NTN communication module, the non-terrestrial network registration accept message 63 carried in the registration accept message 64.

S510: The UE 100 finds an NTN-RAN.

S511: The NTN communication module of the UE 100 sends a registration request message 65 to the NTN-CN through the NTN-RAN, where a registration type of the registration request message 65 is mobility registration.

S512: The NTN-CN sends a registration accept message 66 to the NTN communication module through the NTN-RAN.

For descriptions of step S510 to step S512, refer to the embodiment shown in FIG. 3A and FIG. 3B. Details are not described herein again. In this way, in a process of registering with the TN-CN, the UE 100 may add, to the signaling for registering with the TN-CN, the signaling for registering with the NTN-CN by the NTN communication module, thereby reducing signaling overheads.

In a possible implementation, the UE 100 includes a SIM 3. The UE 100 may use a communication service of a TN through the SIM 3, and may use a roaming service of the NTN. When registering with the TN network, the UE 100 may send NTN capability information of the SIM 3 to the TN-CN, and the TN-CN may send an equivalent public land mobile network (equivalent public land mobile network, EPLMN) list of the NTN PLMN to the UE 100. The UE 100 may search for an NTN based on the EPLMN list, and send a registration request message to the NTN-CN. After receiving the registration request message of the UE 100, the NTN-CN may obtain a registration context of the UE 100 from the TN-CN. The NTN-CN may then send the registration accept message to the UE 100. In this way, the UE 100 can access the NTN in a roaming manner, and does not need to perform a registration procedure with the NTN-CN in the NTN, thereby reducing time for the UE 100 to register with a core network, air interface resources, and power consumption of the UE 100.

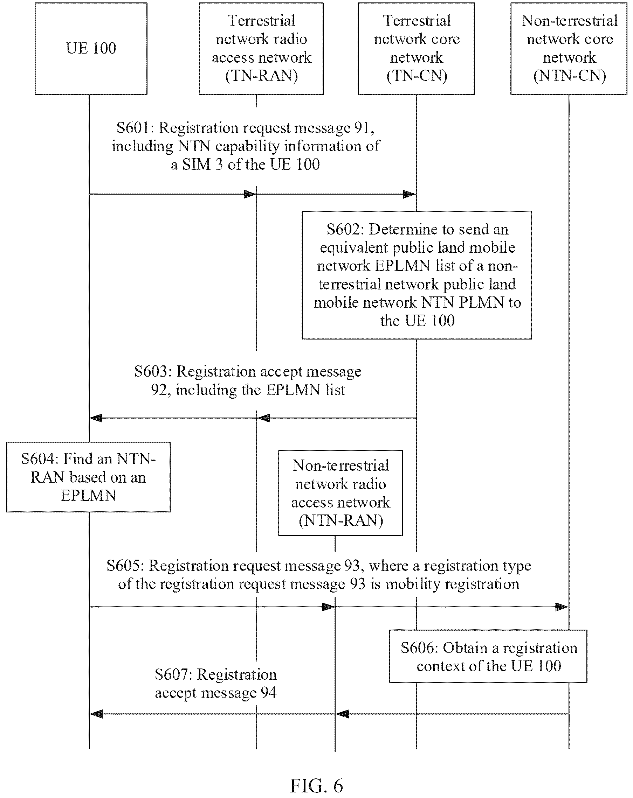

For example, as shown in FIG. 6, the registration method provided in this embodiment of this application includes the following steps.

S601: UE 100 sends a registration request message 91 to a TN-CN through a TN-RAN, where the registration request message 91 includes NTN capability information of a SIM 3 of the UE 100.

When sending the registration request message 91 to the TN-CN, the UE 100 may carry the NTN capability information of the UE 100. The NTN capability information may indicate that the UE 100 supports access to an NTN-CN. The UE 100 may send the registration request message 91 to the TN-CN via a mobile communication module. When the UE 100 is powered on and initiates a registration procedure, a registration type of the registration request message 91 is initial registration. When the UE 100 switches a tracking area (tracking area, TA), updates a capability and a protocol parameter of the UE 100, or changes network slice selection assistance information (network slice selection assistance information, NSSAI) to initiate a registration procedure, a registration type of the registration request message 91 is mobility registration. When the UE 100 initiates a registration procedure when a T3512 expires, a registration type of the registration request message 91 is periodic registration update (periodic registration update).

S602: The TN-CN determines to send an equivalent public land mobile network EPLMN list of a non-terrestrial network public land mobile network NTN PLMN to the UE 100.

The TN-CN and the NTN-CN reach a roaming agreement, and the TN-CN stores the EPLMN list of the NTN-CN. After receiving the registration request message 91 sent by the UE 100, the TN-CN determines that the UE 100 has a capability of communicating with an NTN, and determines to send the EPLMN list of the NTN PLMN to the UE 100.

S603: The TN-CN sends a registration accept message 92 to the UE 100 through the TN-RAN, where the registration accept message 92 includes the EPLMN list.

The TN-CN may add the EPLMN list to the registration accept message 92, and send the registration accept message 92 to the UE 100 through the TN-RAN. It should be noted that, between step S601 and step S603, the UE 100 and the TN-CN further perform steps of network registration, such as obtaining an identity and performing authentication. Specifically, for specific descriptions of registering with the TN-CN by the UE 100, refer to the embodiment shown in FIG. 2A to FIG. 2C. Details are not described herein again.

S604: The UE 100 finds an NTN-RAN based on an EPLMN.

The UE 100 may search for the NTN-RAN based on the EPLMN. The UE 100 may further set up an RRC connection to the NTN-RAN. For details, refer to the embodiments shown in FIG. 2A to FIG. 3B. Details are not described herein again. It should be noted that, to enable the UE 100 to receive a high-quality NTN signal, the UE 100 may perform a satellite alignment operation before performing step S605.

S605: The UE 100 sends a registration request message 93 to the NTN-CN through the NTN-RAN, where a registration type of the registration request message 93 is mobility registration.

The UE 100 may send, to the NTN-CN through the NTN-RAN, the registration request message 93 whose registration type is mobility registration. The registration request message 93 includes an identifier of the UE 100, indicating the NTN-CN to obtain a registration context of the UE 100 from the TN-CN. The identifier of the UE 100 may be an identifier of the SIM 3, for example, an SUCI of the SIM 3. For example, the registration request message 93 may be registration request (mobility registration update). Both the mobile communication module and an NTN communication module of the UE 100 are bound to the SIM 3. The UE 100 may send the registration request message 93 to the NTN-RAN via the NTN communication module, and the NTN-RAN may send the registration request message 93 to the NTN-CN.

S606: The NTN-CN obtains the registration context of the UE 100 from the TN-CN.

After receiving the registration request message 93, the NTN-CN may obtain the registration context of the UE 100 from the TN-CN. The registration context of the UE 100 may be used to transmit service data between the NTN-CN and the UE 100.

The registration context of the UE 100 may include but is not limited to air interface capability information of the UE 100, paging (paging) capability information of the UE 100, an aggregate maximum bit rate (aggregate maximum bit rate, AMBR) of the UE 100, authentication information of the UE 100, and security mode configuration of the UE 100. The NTN-CN may determine an uplink rate, a downlink rate, and the like of the UE 100 based on the air interface capability information of the UE 100, and allocate an appropriate air interface resource to the UE 100. The NTN-CN may determine, based on the aggregate maximum bit rate of the UE 100, a service that the UE 100 supports to initiate, a maximum rate for transmitting service data, and the like. The NTN-CN may further ensure integrity and security of data transmission with the UE 100 based on security mode configuration information of the UE 100. In this way, in a process in which the UE 100 registers with the NTN-CN, steps such as authentication and security mode configuration do not need to be performed. This reduces registration time.

S607: The NTN-CN sends a registration accept message 94 to the UE 100 through the NTN-RAN.

After obtaining the registration context of the UE 100, the NTN-CN may send the registration accept message 94 to the UE 100 through the NTN-RAN, to indicate that the UE 100 successfully registers with the NTN-CN.

In this way, the UE 100 may access the NTN-CN in a roaming manner, and does not need to perform the registration procedure in the NTN, thereby reducing air interface resources, device power consumption, and time consumed for performing the registration procedure.

In a possible implementation, the UE 100 accesses a registration server on the internet through a WLAN. The UE 100 may transmit, to the NTN-CN via the registration server, signaling used by the UE 100 to register with the NTN-CN, so that the UE 100 registers with the NTN-CN. The UE 100 may access the NTN-CN after finding the NTN-RAN. For details, refer to the embodiment shown in FIG. 3A and FIG. 3B or FIG. 5. Details are not described herein again. In this way, because the NTN-CN stores the registration context of the UE 100, the UE 100 can access the NTN-CN without performing an NTN registration operation.

In a possible implementation, the UE 100 includes the mobile communication module, and the mobile communication module is bound to a SIM 4 and a SIM 5. After successfully registering with a TN-CN corresponding to the SIM 4, the UE 100 may perform, through the TN-CN corresponding to the SIM 4, a procedure of registering with a TN-CN corresponding to the SIM 5. For details, refer to the embodiment shown in FIG. 3A and FIG. 3B. Details are not described herein again. Alternatively, in a process of registering with the TN-CN corresponding to the SIM 4, the UE 100 may perform a procedure of registering with a TN-CN corresponding to the SIM 5. For details, refer to the embodiment shown in FIG. 5. Details are not described herein again. In this way, when accessing the TN-CN corresponding to the SIM 5, the UE 100 may not need to perform some steps in the registration procedure, thereby reducing registration time.

In a possible implementation, the UE 100 includes a SIM 6. The UE 100 may use a communication service of a TN 1 through the SIM 6, and may use a roaming service of a TN 2. When registering with a TN 1 network, the UE 100 may send TN 2 capability information of the SIM 6 to a CN of the TN 1, and the CN of the TN 1 may send an EPLMN list of the TN 2 to the UE 100. The UE 100 may search for the TN 2 based on the EPLMN list, and send a registration request message to a CN of the TN 2. After receiving the registration request message of the UE 100, the CN of the TN 2 may obtain the registration context of the UE 100 from the CN of the TN 1. Then, the CN of the TN 2 may then send a registration accept message to the UE 100. In this way, the UE 100 may access the TN 2 in a roaming manner, and does not need to perform a registration procedure with the CN of the TN 2 in the TN 2, thereby reducing time for the UE 100 to register with the TN 2.

The following describes an electronic device provided in embodiments of this application.

The UE 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

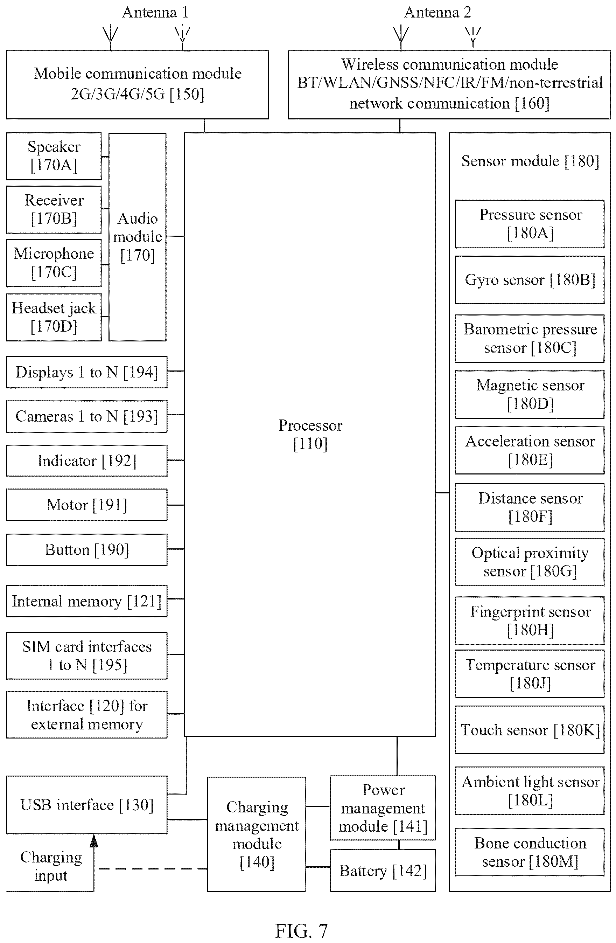

FIG. 7 is a diagram of a structure of UE 100.

The UE 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the UE 100. In some other embodiments of this application, the UE 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the UE 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or data again, the instructions or data may be directly invoked from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of the present invention is merely an example for description, and does not constitute a limitation on the structure of the UE 100. In some other embodiments of this application, the UE 100 may alternatively use an interface connection mode different from that in the foregoing embodiment, or use a combination of a plurality of interface connection modes.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the UE 100. The charging management module 140 may further supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the UE 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the UE 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the UE 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the UE 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, a non-terrestrial network communication module, or the like. The wireless communication module 160 may be one or more devices that integrate at least one communication processing module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The non-terrestrial network communication module (NTN communication module) may be configured to process a signal sent by the UE 100 to an NTN. The non-terrestrial network communication module may be further configured to process a signal from the NTN. In this embodiment of this application, the non-terrestrial network communication module may send a message to an NTN-RAN. The non-terrestrial network communication module may further receive a message from the NTN-RAN.

In some embodiments, the antenna 1 and the mobile communication module 150 in the UE 100 are coupled, and the antenna 2 and the wireless communication module 160 in the UE 100 are coupled, so that the UE 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The UE 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the UE 100 may include one or N displays 194, where N is a positive integer greater than 1.

The UE 100 may implement a photographing function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the UE 100 may include one or N cameras 193, where N is a positive integer greater than 1.

The digital signal processor is configured to process a digital signal, and may further process another digital signal in addition to a digital image signal. For example, when the UE 100 selects a frequency, the digital signal processor is configured to perform Fourier transformation on frequency energy.

The video codec is configured to compress or decompress a digital video. The UE 100 may support one or more video codecs. Therefore, the UE 100 may play or record videos in a plurality of coding formats, for example, moving picture experts group (moving picture experts group, MPEG) 1, MPEG 2, MPEG 3, and MPEG 4.

The NPU is a neural-network (neural-network, NN) computing processor, and quickly processes input information with reference to a structure of a biological neural network, for example, a transfer mode between human brain neurons, and may further continuously perform self-learning. Applications such as intelligent cognition of the UE 100, for example, image recognition, facial recognition, voice recognition, and text understanding, can be implemented through the NPU.

The interface 120 for external memory may be configured to connect to an external non-volatile memory, to expand a storage capability of the UE 100. The external non-volatile memory communicates with the processor 110 through the interface 120 for external memory, to implement a data storage function. For example, a file like music or a video is stored in the external non-volatile memory.

The internal memory 121 may be configured to store computer-executable program code. The executable program code includes instructions. The processor 110 runs the instructions stored in the internal memory 121, to perform various function applications and data processing of the UE 100. The internal memory 121 may include a program storage area and a data storage area. The program storage area may store an operating system, an application required by at least one function (for example, a sound playing function or an image playing function), and the like. The data storage area may store data (such as audio data and a phone book) created during use of the UE 100, and the like. In addition, the internal memory 121 may include a high-speed random access memory, or may include a non-volatile memory, for example, at least one magnetic disk storage device, a flash storage device, or a universal flash storage (universal flash storage, UFS).

The UE 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The speaker 170A, also referred to as a "horn", is configured to convert an audio electrical signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal.

The pressure sensor 180A is configured to sense a pressure signal, and can convert the pressure signal into an electrical signal. In some embodiments, the pressure sensor 180A may be disposed on the display 194. The gyro sensor 180B may be configured to determine a motion gesture of the UE 100. The barometric pressure sensor 180C is configured to measure barometric pressure. The magnetic sensor 180D includes a Hall sensor, and opening and closing of a flip cover may be detected by using the magnetic sensor 180D. The acceleration sensor 180E may detect accelerations in various directions (usually on three axes) of the UE 100 The distance sensor 180F is configured to measure a distance. The optical proximity sensor 180G may also be used in a flip cover mode or a pocket mode to automatically perform screen unlocking or locking. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch panel". The touch sensor 180K may be disposed in the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the UE 100 at a position different from that of the display 194. The bone conduction sensor 180M may obtain a vibration signal. The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card, for example, a SIM 1, a SIM 2, and a SIM 3. The SIM card may be inserted into the SIM card interface 195 or removed from the SIM card interface 195, to implement contact with or separation from the UE 100. The UE 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The UE 100 interacts with a network through the SIM card, to implement functions such as conversation and data communication. In some embodiments, the UE 100 uses an eSIM, namely, an embedded SIM card. The eSIM card may be embedded into the UE 100, and cannot be separated from the UE 100.

In conclusion, the foregoing embodiments are only intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A registration method, applied to a communication system, wherein the communication system comprises a user equipment UE, a non-terrestrial network core network NTN-CN device, a non-terrestrial network radio access network NTN-RAN device, and a terrestrial network core network TN-CN device; and the method comprises:
sending, by the UE, a first registration request message to the TN-CN device, wherein the first registration request message is used for the UE to register with the NTN-CN device;
sending, by the TN-CN device, the first registration request message to the NTN-CN device;
sending, by the NTN-CN device, a first registration accept message to the TN-CN device, wherein the first registration accept message indicates that the UE successfully registers with the NTN-CN device;
sending, by the TN-CN device, the first registration accept message to the UE;
finding, by the UE, the NTN-RAN device, and sending a second registration request message to the NTN-CN device, wherein the second registration request message is used for the UE to register with the NTN-CN device;
sending, by the NTN-CN device, a second registration accept message to the UE; and
receiving, by the UE, the second registration accept message, and registering with the NTN-CN device.

2. The method according to claim 1, wherein the communication system further comprises a non-terrestrial network radio access network NTN-RAN device; and the sending the second registration request message to the NTN-CN device specifically comprises:
sending, by the UE, the second registration request message to the NTN-CN device via the NTN-RAN device; and
sending, by the NTN-CN device, the second registration accept message to the UE specifically comprises:
sending, by the NTN-CN, the second registration accept message to the UE via the NTN-RAN device.

3. The method according to claim 1 or 2, wherein the method further comprises:
after receiving the first registration request message, obtaining, by the NTN-CN device, an identifier of a first SIM card of the UE via the TN-CN device;
after receiving the identifier of the first SIM card, performing, by the NTN-CN device, authentication on the first SIM card via the TN-CN device; and
after successfully authenticating the first SIM card, indicating, by the NTN-CN device via the TN-CN device, the UE to perform security mode configuration on the first SIM card; and
sending, by the NTN-CN device, the first registration accept message to the TN-CN device specifically comprises:
after the UE completes the security mode configuration on the first SIM card, sending, by the NTN-CN device, the first registration accept message to the TN-CN device.

4. The method according to claim 3, wherein after receiving the first registration request message, obtaining, by the NTN-CN device, the identifier of the first SIM card of the UE via the TN-CN device specifically comprises:
after receiving the first registration message, sending, by the NTN-CN device, a first N1 non-terrestrial network container N1 NTN container to the TN-CN device, wherein the first N1 NTN container comprises a first identity request message, and the first identity request message is used to obtain the identifier of the first SIM card;
sending, by the TN-CN device, a first non-access stratum NAS message to the UE, wherein the first NAS message comprises the first N1 NTN container;
after receiving the first N1 NTN container, sending, by the UE, a second NAS message to the TN-CN device, wherein the second NAS message comprises a second N1 TNT container, the second N1 TNT container comprises a first identity response message, and the first identity response message comprises the identifier of the first SIM card; and
sending, by the TN-CN device, the second N1 TNT container to the NTN-CN device.

5. The method according to claim 3 or 4, wherein after receiving the identifier of the first SIM card, performing, by the NTN-CN device, authentication on the first SIM card via the TN-CN device specifically comprises:
after receiving the identifier of the first SIM card, sending, by the NTN-CN device, a third N1 non-terrestrial network container N1 NTN container to the TN-CN device, wherein the third N1 NTN container comprises a first authentication request message, and the first authentication request message is used to perform authentication on the first SIM card;
sending, by the TN-CN device, a third NAS message to the UE, wherein the third NAS message comprises the third N1 NTN container;
after receiving the third N1 NTN container, sending, by the UE, a fourth NAS message to the TN-CN device, wherein the fourth NAS message comprises a fourth N1 TNT container, the fourth N1 TNT container comprises a first authentication response message, and the first authentication response message comprises an authentication response of the UE; and
sending, by the TN-CN device, the fourth N1 TNT container to the NTN-CN device.

6. The method according to any one of claims 3 to 5, wherein after successfully authenticating the first SIM card, indicating, by the NTN-CN device via the TN-CN device, the UE to perform security mode configuration specifically comprises:
after successfully authenticating the first SIM card, sending, by the NTN-CN device, a fifth N1 non-terrestrial network container N1 NTN container to the TN-CN device, wherein the fifth N1 NTN container comprises a first security mode command message, and the first security mode command message indicates the UE to perform security mode configuration;
sending, by the TN-CN device, a fifth NAS message to the UE, wherein the fifth NAS message comprises the fifth N1 NTN container;
after receiving the fifth N1 NTN container, sending, by the UE, a sixth NAS message to the TN-CN device, wherein the sixth NAS message comprises a sixth N1 TNT container, the sixth N1 TNT container comprises a first security mode complete message, and the first security mode complete message indicates that the UE has completed the security mode configuration; and
sending, by the TN-CN device, the sixth N1 TNT container to the NTN-CN device.

7. The method according to any one of claims 1 to 6, wherein sending, by the UE, the first registration request message to the TN-CN device specifically comprises:
sending, by the UE, a seventh NAS message to the TN-CN device, wherein the seventh NAS message comprises a seventh N1 TNT container, and the seventh N1 TNT container comprises the first registration request message.

8. The method according to claim 7, wherein sending, by the TN-CN device, the first registration request message to the NTN-CN device specifically comprises:
sending, by the TN-CN device, the seventh N1 TNT container to the NTN-CN device.

9. The method according to any one of claims 1 to 8, wherein the UE comprises a mobile communication module, and sending, by the UE, the first registration request message to the TN-CN device specifically comprises:
registering, by the UE, with the TN-CN device via the mobile communication module; and
sending, by the UE, the first registration request message to the TN-CN device via the mobile communication module.

10. The method according to claim 3, wherein sending, by the UE, the first registration request message to the TN-CN device specifically comprises:
sending, by the UE, a third registration request message to the TN-CN device, wherein the third registration request message comprises the first registration request message, and the third registration request message is used for the UE to register with the TN-CN device.

11. The method according to claim 10, wherein before obtaining the identifier of the first SIM card of the UE via the TN-CN device, the method further comprises:
after receiving the third registration request message, obtaining, by the TN-CN device, an identifier of a second SIM card of the UE;
after receiving the identifier of the second SIM card, performing, by the TN-CN device, authentication on the second SIM card; and
after successfully authenticating the second SIM card, indicating, by the TN-CN device, the UE to perform security mode configuration on the second SIM card; and
obtaining the identifier of the first SIM card of the UE via the TN-CN device specifically comprises:
obtaining, by the TN-CN device, the identifier of the first SIM card of the UE after the UE completes security mode configuration on the second SIM card; and
sending, by the TN-CN device, the identifier of the first SIM card to the NTN-CN device.

12. The method according to any one of claims 1 to 3, 10, and 11, wherein sending, by the TN-CN device, the first registration accept message to the UE specifically comprises:
sending, by the TN-CN device, a third registration accept message to the UE, wherein the third registration accept message comprises the first registration accept message, and the third registration accept message indicates the UE to register with the TN-CN device.

13. The method according to any one of claims 1 to 12, wherein a registration type of the first registration request message is initial registration, and a registration type of the second registration request message is mobility registration.

14. A registration method, applied to a user equipment UE, wherein the method comprises:
sending, by the UE, a first registration request message to a terrestrial network core network TN-CN device, wherein the first registration request message is used by the UE to register with a non-terrestrial network core network NTN-CN device;
receiving, by the UE, a first registration accept message sent by the TN-CN device, wherein the first registration accept message indicates that the UE successfully registers with the NTN-CN device;
finding, by the UE, a non-terrestrial network radio access network NTN-RAN device, and sending a second registration request message to the NTN-CN device, wherein the second registration request message is used for the UE to register with the NTN-CN device; and
receiving, by the UE, the second registration accept message, and registering with the NTN-CN device.

15. The method according to claim 14, wherein the sending the second registration request message to the NTN-CN device specifically comprises:
sending, by the UE, the second registration request message to the NTN-CN device via the NTN-RAN device; and
receiving, by the UE, the second registration accept message specifically comprises:
receiving, by the UE via the NTN-RAN device, the second registration accept message sent by the NTN-CN.

16. The method according to claim 14 or 15, wherein the UE comprises a mobile communication module and a non-terrestrial network NTN communication module, and sending, by the UE, the first registration request message to the TN-CN device specifically comprises:
sending, by the UE, the first registration request message to the TN-CN device via the mobile communication module;
receiving, by the UE, the first registration accept message sent by the TN-CN device specifically comprises:
receiving, by the UE via the mobile communication module, the first registration accept message sent by the TN-CN device;
sending the second registration request message to the NTN-CN device specifically comprises:
sending, by the UE, the second registration request message to the NTN-CN device via the NTN communication module; and
receiving, by the UE, the second registration accept message specifically comprises:
receiving, by the UE, the second registration accept message via the NTN communication module.

17. The method according to any one of claims 14 to 16, wherein the UE comprises the NTN communication module, and the NTN communication module is bound to a first SIM card; and before receiving, by the UE, the first registration accept message sent by the TN-CN device, the method further comprises:
receiving, by the UE, a first identity request message sent by the TN-CN device, wherein the first identity request message is used to obtain an identifier of the first SIM card;
sending, by the UE, a first identity response message to the TN-CN device, wherein the first identity response message comprises the identifier of the first SIM card;
receiving, by the UE, a first authentication request message sent by the TN-CN device, wherein the first authentication request message is used to perform authentication on the first SIM card;
sending, by the UE, a first authentication response message to the TN-CN device, wherein the first authentication response message comprises an authentication response of the UE;
receiving, by the UE, a first security mode command message sent by the TN-CN device, wherein the first security mode command message indicates the UE to perform security mode configuration on the first SIM card; and
sending, by the UE, a first security mode complete message to the TN-CN device, wherein the first security mode complete message is used to notify the NTN-CN device that the UE has completed the security mode configuration on the first SIM card.

18. The method according to any one of claims 14 to 17, wherein sending, by the UE, the first registration request message to the TN-CN device specifically comprises:
sending, by the UE, a first NAS message to the TN-CN device, wherein the first NAS message comprises a first N1 non-terrestrial network container N1 TNT container, and the first N1 TNT container comprises the first registration request message.

19. The method according to any one of claims 14 to 18, wherein receiving, by the UE, the first registration accept message sent by the TN-CN device specifically comprises:
receiving, by the UE, a second NAS message sent by the TN-CN device, wherein the second NAS message comprises a second N1 TNT container, and the second N1 TNT container comprises the first registration accept message.

20. The method according to any one of claims 14 to 19, wherein before sending, by the UE, the first registration request message to the TN-CN device, the method further comprises:
registering, by the UE, with the TN-CN device.

21. The method according to any one of claims 14 to 17, wherein sending, by the UE, the first registration request message to the TN-CN device specifically comprises:
sending, by the UE, a third registration request message to the TN-CN device, wherein the third registration request message comprises the first registration request message, and the third registration request message is used for the UE to register with the TN-CN device.

22. The method according to any one of claims 14 to 17, and 21 wherein receiving, by the UE, the first registration accept message sent by the TN-CN device specifically comprises:
receiving, by the UE, a third registration accept message sent by the TN-CN device, wherein the third registration accept message comprises the first registration accept message, and the third registration accept message indicates the UE to register with the TN-CN device.

23. The method according to any one of claims 14 to 22, wherein a registration type of the first registration request message is initial registration, and a registration type of the second registration request message is mobility registration.

24. A registration method, applied to a communication system, wherein the communication system comprises a user equipment UE, a non-terrestrial network core network NTN-CN device, a non-terrestrial network radio access network NTN-RAN device, and a terrestrial network core network TN-CN device; and the method comprises:
sending, by the UE, a first registration request message to the TN-CN device, wherein the first registration request message comprises capability information indicating that the UE supports NTN communication, and the first registration request message is used for the UE to register with the TN-CN device;
sending, by the TN-CN device, a first registration accept message to the UE, wherein the first registration accept message comprises an equivalent public land mobile network EPLMN of an NTN, and the first registration accept message indicates that the UE successfully registers with the TN-CN device;
searching, by the UE, for the NTN-RAN device based on the EPLMN;
sending, by the UE, a second registration request message to the NTN-CN device, wherein the second registration request message is used for the UE to register with the NTN-CN device;
obtaining, by the NTN-CN device, a registration context of the UE from the TN-CN device, wherein the registration context of the UE comprises authentication information of the UE, security mode configuration of the UE, air interface capability information of the UE, paging capability information of the UE, and an aggregate maximum bit rate AMBR of the UE;
sending, by the NTN-CN device, a second registration accept message to the UE; and
receiving, by the UE, the second registration accept message, and registering with the NTN-CN device.

25. A User equipment, comprising a plurality of processors and one or more memories, wherein the plurality of processors comprise a mobile communication module and an NTN communication module, the one or more memories are coupled to the plurality of processors, the one or more memories are configured to store a computer executable program, and when the one or more processors execute the computer executable program, the terminal is enabled to perform the method according to any one of claims 14 to 23.

26. A computer-readable storage medium, storing a computer program, wherein when the computer program is run on a processor of a computer, the method according to any one of claims 14 to 23 is performed.

27. A chip, used in user equipment, and comprising a plurality of modules, wherein the plurality of modules comprise a mobile communication module and an NTN communication module, and the plurality of modules are configured to perform the method according to any one of claims 14 to 23.
